# EUROPEAN PATENT SPECIFICATION

(11) **EP 3 481 017 B1**
(45) Date of publication and mention of the grant of the patent: **17.03.2021**
(21) Application number: 17823596.6
(22) Date of filing: 04.07.2017
(51) Int. Cl.: H04L 12/927, H04W 48/16

(54) **NETWORK SLICE SELECTION METHOD, APPARATUS AND SYSTEM**
VERFAHREN ZUR AUSWAHL VON NETZWERK-SLICES, VORRICHTUNG UND SYSTEM
PROCÉDÉ, APPAREIL, ET SYSTÈME DE SÉLECTION DE TRANCHE DE RÉSEAU

(30) Priority: 04.07.2016 CN 201610518094
(43) Date of publication of application: 08.05.2019
(73) Proprietor: China Mobile Communication Ltd., Research Institute, Beijing 100053 (CN); China Mobile Communications Corporation, Beijing 100032 (CN)
(72) Inventor: SUN, Xiaowen, Beijing 100032 (CN); CHEN, Wei, Beijing 100032 (CN); LU, Lu, Beijing 100032 (CN); SUN, Tao, Beijing 100032 (CN)
(74) Representative: GPI & Associés
(86) International application number: PCT/CN2017/091580
(87) International publication number: WO 2018/006784

(56) References cited:
- EP-A1- 3 442 202
- CN-A- 101 801 102
- CN-A- 102 804 902
- CN-A- 104 081 719
- CN-A- 105 516 312
- US-A1- 2014 233 400
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 8 June 2016 (2016-06-08), pages 1-179, XP051123271, [retrieved on 2016-06-08]

## Description

### TECHNICAL FIELD

The present disclosure relates to a field of communication technology, and specifically relates to network slice selection methods, a network slice selection device and a network slice selection system.

### BACKGROUND

A mobile network needs to satisfy more diversified service scenes, such as a scene having a low power-consumption and enormous connections, a scene having hot spots and high capacity, a scene having continuous wide-area coverages, a scene having a low latency and a high reliability, or the like. A current mobile network serves various service scenes based on a set of logical architectures. A Mobility Management Entity (MME) is equipped with a certain degree of intelligence, and may select a gateway based on subscription information and a service identifier of a user. A base station may select a MME according a weight of loads on MMEs. However, such a solution is incapable of being adapted to diversified service scenes (such as Internet of Things (IoT), a low latency, or the like) in a forthcoming network due to a simple architecture and inflexiblity thereof, and cannot meet various network requirements with a low cost. Failure of one network element may affect operations of other services.

In a relevant mobile network, a gateway (such as a Gateway GPRS (General Packet Radio Service) Support Node (GGSN), a Public Data Network (PDN) network (PGW)) may also be selected through an Access Point Name (APN). The APN may be a service identifier. However, a management of a network connection based on the APN still has problems that an end-to-end service-oriented network cannot be established, a network element device cannot be effectively separated, and services differentiated in a granularity of the APN cannot be flexibly and precisely configured.

A network slice is a technique provided for addressing the problems. Through the network slice, relevant physical network resources may be divided into logically different networks, and services similar to those in proprietary networks may be provided for different service scenes.

However, a solution of effectively selecting a network slice is still not provided.

3GPP TR 23.799 V0.6.0 (2016-07) (Technical Specification Group Services and System Aspects; Study on Architecture for Next Generation System (Release 14)) discloses that, UE sends and attach Request including the IMSI and acquires the network slice instance matching a certain MDD from common control network function. Subsequent NAS Network Slicing Procedures are performed.

### SUMMARY

This invention is defined by the appended claims. In view of the above, a network-slice selection method, a network-slice selection device and a system are provided in the present disclosure, as defined in the accompany claims, so as to address a technical problem in the related art that a network slice cannot be selected flexibly.

In a first aspect of the present disclosure, a network-slice selection method is provided and includes: obtaining one or more of a network-slice selection policy, user subscription information, a network-slice selection assistance parameter, and a user context by a network-slice selection control function entity; and determining network-slice selection information according to one or more of the network-slice selection policy, the user subscription information, the network-slice selection assistance parameter, and the user context by the network-slice selection control function entity, and transmitting the determined network-slice selection information to a network-slice routing function entity or an access-network side device, so that the network-slice routing function entity or the access-network side device performs routing for signaling or data, wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

Optionally, the obtaining one or more of the network-slice selection assistance parameter and the user context by the network-slice selection control function entity, includes: receiving, by the network-slice selection control function entity, an attach request transmitted by the network-slice routing function entity or the access-network side device, wherein the attach request carries one or more of the network-slice selection assistance parameter and the user context; the obtaining the network-slice selection policy by the network-slice selection control function entity, includes: obtaining the network-slice selection policy from a Fifth Generation mobile communication network (5G) policy network function entity by the network-slice selection control function entity; and the obtaining the user subscription information by the network-slice selection control function entity, includes: obtaining the user subscription information from a subscription database by the network-slice selection control function entity.

Optionally, the network-slice routing function entity is at a Radio Access Network, or at a Core Network, or between the Radio Access Network and the Core Network, or is combined with the network-slice selection control function entity; the network-slice selection control function entity is at the Radio Access Network or at the Core Network, or is a network function entity independent from the Radio Access Network and the Core Network.

Optionally, the network-slice selection assistance parameter includes one or more of a network-slice identifier, a service type, a network-slice descriptor, a terminal usage type, and a tenant identifier.

Optionally, the network-slice identifier includes a network-slice type identifier and/or a network-slice instance identifier.

Optionally, the network-slice selection information includes an identifier of a control plane function or an identifier of a group of control plane functions of a network slice accessed by a user.

Optionally, the identifier of the control plane function or the identifier of the group of control plane functions of the network slice corresponds to a network-slice identifier of the network slice.

In a second aspect of the present disclosure, a network-slice selection method is provided and includes: receiving, by a network-slice routing function entity or an access-network side device, network-slice selection information transmitted by a network-slice selection control function entity, wherein the network-slice selection information is determined by the network-slice selection control function entity according to one or more of a network-slice selection policy, user subscription information, a network-slice selection assistance parameter, and a user context; and performing routing for signaling or data by the network-slice routing function entity or the access-network side device according to the network-slice selection information, wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

Optionally, the method further includes: transmitting a network-slice identifier to a terminal by the network-slice routing function entity or the access-network side device, so that the terminal updates the network-slice identifier stored in the terminal according to the network-slice identifier received by the terminal.

Optionally, the network-slice selection assistance parameter and/or the user context are obtained by the network-slice selection control function entity from an attach request received by the network-slice selection control function entity; the network-slice selection policy is obtained from a Fifth Generation mobile communication (5G) policy network function entity by the network-slice selection control function entity; and the user subscription information is obtained from a subscription database by the network-slice selection control function entity.

Optionally, the network-slice routing function entity is at a Radio Access Network or at a Core Network, or between the Radio Access Network and the Core Network, or is combined with the network-slice selection control function entity; the network-slice selection control function entity is at the Radio Access Network or at the Core Network, or is a network function entity independent from the Radio Access Network and the Core Network.

Optionally, the network-slice selection assistance parameter includes one or more of a network-slice identifier, a service type, a network-slice descriptor, a terminal usage type, and a tenant identifier.

Optionally, the network-slice identifier includes a network-slice type identifier and/or a network-slice instance identifier.

Optionally, the network-slice selection information includes an identifier of a control plane function or an identifier of a group of control plane functions of a network slice accessed by a user.

Optionally, the identifier of the control plane function or the identifier of the group of control plane functions of the network slice corresponds to a network-slice identifier of the network slice.

Optionally, the method further includes: obtaining a network-slice selection correspondence table from the network-slice selection control function entity by the network-slice routing function entity or the access-network side device, wherein the network-slice selection correspondence table records a correspondence relation between the network-slice selection assistance parameter or a network-slice identifier and the network-slice selection information.

Optionally, the method further includes: receiving an attach request by the network-slice routing function entity or the access-network side device, wherein the attach request carries the network-slice selection assistance parameter; determining the network-slice selection information by the network-slice routing function entity or the access-network side device according to the network-slice selection correspondence table and the network-slice selection assistance parameter; and performing the routing for the signaling or the data by the network-slice routing function entity or the access-network side device according to the network-slice selection information.

Optionally, the method further includes: obtaining a new correspondence relation between the network-slice selection assistance parameter and the network-slice selection information from the network-slice selection control function entity by the network-slice routing function entity or the access-network side device; and updating the network-slice selection correspondence table by the network-slice routing function entity or the access-network side device using the new correspondence relation between the network-slice selection assistance parameter and the network-slice selection information.

Optionally, the method further includes: in case that the network-slice routing function entity or the access-network side device receives information about an attach error, re-transmitting the network-slice selection assistance parameter to the network-slice selection control function entity by the network-slice routing function entity or the access-network side device, so as to obtain correct network-slice selection information.

Optionally, the network-slice routing function entity or the access-network side device is provided with capability of identifying whether a terminal supports a network slice or not.

Optionally, in case that the terminal does not support the network slice, a message carried by the terminal does not have a field of the network-slice selection assistance parameter, the network-slice routing function entity or the access-network side device transmits a message to the network-slice selection control function entity, so that the network-slice selection control function entity informs the terminal to access a network slice or informs the terminal of a control plane function of a network slice to be accessed by the terminal; in case that the terminal supports the network slice, the message carried by the UE includes the field of the network-slice selection assistance parameter, wherein the field is Null or carries a descriptor of the network-slice selection assistance parameter.

Optionally, the method further includes: routing, by the network-slice routing function entity or the access-network side device, a user to a network slice corresponding to the user; and performing, by a control plane function of a selected network slice, authentication and authorization for the user to access the network slice.

Optionally, the performing, by the control plane function of the selected network slice, authentication and authorization for the user to access the network slice, includes: in case that the control plane function of the network slice sends an authentication request, feeding back, by the subscription database to the control plane function of the network slice, subscription information of the user in a current Public Land Mobile Network (PLMN), and determining, by the control plane function of the network slice according to the subscription information, whether the user is allowed to access the control plane function of the selected network slice or not, so that the authentication and the authorization for the user to access the network slice are completed.

In a third aspect of the present disclosure, a network-slice selection control function entity is provided and includes: a first reception module, configured to obtain one or more of a network-slice selection policy, user subscription information, a network-slice selection assistance parameter, and a user context; and a first determination module, configured to determine network-slice selection information according to one or more of the network-slice selection policy, the user subscription information, the network-slice selection assistance parameter, and the user context, and transmit the determined network-slice selection information to a network-slice routing function entity, so that the network-slice routing function entity performs routing for signaling or data, wherein the network slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

Optionally, the first reception module is configured to receive an attach request transmitted by the network-slice routing function entity or an access-network side device, wherein the attach request carries the network-slice selection assistance parameter and/or the user context; the first reception module is configured to obtain the network-slice selection policy from a Fifth Generation mobile communication (5G) policy network function entity; the first reception module is configured to obtain the user subscription information from a subscription database.

Optionally, the network-slice routing function entity is at a Radio Access Network, or at a Core Network, or between the Radio Access Network and the Core Network, or is combined with a network-slice selection control function entity, and the network-slice selection control function entity is at the Radio Access Network, or at the Core Network, or is a network function entity independent from the Radio Access Network and the Core Network.

Optionally, the network-slice selection assistance parameter includes one or more of a network-slice identifier, a service type, a network-slice descriptor, a terminal usage type, and a tenant identifier.

Optionally, the network-slice identifier includes a network-slice type identifier and/or a network-slice instance identifier.

Optionally, the network-slice selection information includes an identifier of a control plane function or an identifier of a group of control plane functions of a network slice accessed by a user.

In a fourth aspect of the present disclosure, a network-slice selection device is provided and includes: a second reception module, configured to receive network-slice selection information transmitted by a network-slice selection control function entity, wherein the network-slice selection information is determined by the network-slice selection control function entity according to one or more of a network-slice selection policy, user subscription information, a network-slice selection assistance parameter, and a user context; and a first processing module, configured to perform routing for signaling or data according to the network-slice selection information, wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

Optionally, the device further includes: a first transmission module, configured to transmit a network-slice identifier to a terminal so that the terminal updates the network-slice identifier stored by the terminal according to the network-slice identifier received by the terminal.

Optionally, the network-slice selection assistance parameter and/or the user context are obtained by the network-slice selection control function entity from an attach request received by the network-slice selection control function entity; the network-slice selection policy is obtained by the network-slice selection control function entity from a Fifth Generation (5G) policy network function entity; the user subscription information is obtained from a subscription database by the network-slice selection control function entity.

Optionally, the device is a network-slice routing function entity, the network-slice routing function entity is at a Radio Access Network, or at a Core Network, or between the Radio Access Network and the Core Network, or is combined with the network-slice selection control function entity; the network-slice selection control function entity is at the Radio Access Network, or at the Core Network, or is a network function entity independent from the Radio Access Network or the Core Network.

Optionally, the network-slice selection assistance parameter includes one or more of a network-slice identifier, a service type, a network-slice descriptor, a terminal usage type, and a tenant identifier.

Optionally, the network-slice identifier includes a network-slice type identifier and/or a network-slice instance identifier.

Optionally, the network-slice selection information includes an identifier of a control plane function or an identifier of a group of control plane functions of a network slice accessed by a user.

Optionally, the identifier of the control plane function or the identifier of the group of control plane functions of the network slice corresponds to a network-slice identifier of the network slice.

Optionally, the device further includes: a storage module, configured to obtain a network-slice selection correspondence table from the network-slice selection control function entity, wherein the network-slice selection correspondence table records a correspondence relation between the network-slice selection assistance parameter or a network-slice identifier and the network-slice selection information.

Optionally, the device further includes: a third reception module, configured to receive an attach request, wherein the attach request carries the network-slice selection assistance parameter; a second determination module, configured to determine the network-slice selection information according to the network-slice selection correspondence table and the network-slice selection assistance parameter; and a second processing module, configured to perform routing for signaling or data according to the network-slice selection information.

Optionally, the device further includes: a fourth reception module, configured to obtain a new correspondence relation between the network-slice selection assistance parameter and the network-slice selection information from the network-slice selection control function entity; and a updating module is configured to update the network-slice selection correspondence table using the new correspondence relation between the network-slice selection assistance parameter and the network-slice selection information.

Optionally, the device further includes: a re-transmission module, configured to, in case that information about an attach error is received, re-transmit the network-slice selection assistance parameter to the network-slice selection control function entity, so as to obtain a correct network-slice selection result.

In a fifth aspect of the present disclosure, a network-slice selection method applied to a roaming scene is provided and includes: obtaining a network-slice identifier, wherein the network-slice identifier includes a network-slice type identifier and a network-slice instance identifier; identifying a corresponding Public Land Mobile Network (PLMN) according to the network-slice type identifier; and enabling a user to access a network slice corresponding to the network-slice instance identifier according to the network-slice instance identifier.

Optionally, the identifying the corresponding Public Land Mobile Network (PLMN) according to the network-slice type identifier, including: determining an operator and a network type according to the network-slice type identifier; and selecting the corresponding PLMN according to the operator and the network type.

In a sixth aspect of the present disclosure, a network-slice selection device is provided and includes: an obtaining module, configured to obtain a network-slice identifier, wherein the network-slice identifier includes a network-slice type identifier and a network-slice instance identifier; a selection module, configured to identify a corresponding Public Land Mobile Network (PLMN) according to the network-slice type identifier; and an access module, configured to enable a user to access a network slice corresponding to the network-slice instance identifier according to the network-slice instance identifier.

Optionally, the selection module is further configured to determine an operator and a network type according to the network-slice type identifier, and identify the corresponding PLMN according to the determined operator and the network type.

In a seventh aspect of the present disclosure, a network-slice selection method is provided and includes: in case that a message carried by a terminal does not include a field of a network-slice selection assistance parameter, transmitting the message to a network-slice selection control function entity by a network-slice routing function entity or an access-network side device, so that the network-slice selection control function entity selects a network slice suitable for the terminal and transmits a network-slice identifier of the selected network slice to the network-slice routing function entity or the access-network side device; and transmitting, by the network-slice routing function entity or the access-network side device to the terminal, the network-slice identifier of the network slice selected by the network-slice routing function entity or the access-network side device, so that the terminal re-initiates an attach request.

In an eighth aspect of the present disclosure, a network-slice selection device is provided and includes: a second transmission module, configured to, in case that a message carried by a terminal does not include a field of a network-slice selection assistance parameter, transmit the message to a network-slice selection control function entity, so that the network-slice selection control function entity selects a network slice suitable for the terminal and transmits a network-slice identifier of the selected network slice to a network-slice routing function entity or an access-network side device; and a third processing module, configured to transmit, to the terminal, the network-slice identifier of the network slice selected by the network-slice routing function entity or the access-network side device, so that the terminal re-initiates an attach request.

In a ninth aspect of the present disclosure, a network-slice selection method is provided and includes: transmitting a control instruction by an end-to-end network-slice management and arrangement function entity, wherein the control instruction is any one of an instruction for adding a new network slice, an instruction for removing a network slice, and an instruction for updating a network-slice identifier; and transmitting, to a network-slice selection control function entity by the end-to-end network-slice management and arrangement function entity, a message for updating a correspondence relation between a network-slice identifier and an identifier of a control plane function of a network slice or an identifier of a group of control plane functions of the network slice, so that the network-slice selection control function entity updates the correspondence relation.

In a tenth aspect of the present disclosure, a network-slice selection device is provided and includes: a third transmission module, configured to transmit a control instruction, wherein the control instruction is any one of an instruction for adding a new network slice, an instruction for removing a network slice, and an instruction for updating a network-slice identifier; and a fourth transmission module, configured to transmit, to a network-slice selection control function entity, a message for updating a correspondence relation between a network-slice identifier and an identifier of a control plane function of a network slice or an identifier of a group of control plane functions of the network slice, so that the network-slice selection control function entity updates the correspondence relation.

Any one of the above technical solutions has beneficial effects or advantages as follow. When network-slice selection is needed to be performed, the network-slice selection may be performed flexibly according to the network-slice identifier or the service type, without needing to configure a port of a network slice specifically, and different network services may correspond to different network slices, influence among the network services may be avoided, and the network stability is higher. No signaling interaction exists between the network-slice selection control function entity and network slices and a quantity of external interfaces of the network slices is reduced. Further, the network-slice selection correspondence table may be stored at the RAN side, and the network-slice selection information may be obtained directly through searching the network-slice selection correspondence table, so as to avoids a case in which the UE frequently visits the network-slice selection control function entity to obtain the network-slice selection information when the UE accesses network slices for multiple times.

### BRIEF DESCRIPTION OF THE DRAWINGS

Fig. 1 is a schematic diagram of a network slice architecture in an exemplary application scene according to some embodiments of the present disclosure;
Figure 2 is a flowchart of a network slice selection method in some embodiments of the present disclosure;
Figure 3 is a flowchart of a network slice selection method in some embodiments of the present disclosure;
Figure 4 is a flowchart of selecting and attaching a network slice in some embodiments of the present disclosure;
Figure 5 is a flowchart of adding a network slice in some embodiments of the present disclosure;
Figure 6 is a flowchart of removing a network slice in some embodiments of the present disclosure;
Figure 7 is a flowchart of updating a network slice in some embodiments of the present disclosure;
Figure 8 is a flowchart of updating a network slice in some embodiments of the present disclosure;
Figure 9 is a block diagram of a network-slice selection control function entity in some embodiments of the present disclosure;
Figure 10 is a block diagram of a network-slice selection device in some embodiments of the present disclosure;
Figure 11 is a flowchart of a network-slice selection method in some embodiments of the present disclosure; and
Figure 12 is a block diagram of a network-slice selection device in some embodiments of the present disclosure.

### DETAILED DESCRIPTION

Exemplary embodiments of the present disclosure will be described in details hereinafter in conjunction with drawings of the present disclosure. Although the exemplary embodiments are shown in the drawings, it should be understood that the embodiments of the present disclosure may be implemented in various ways, and the present disclosure is not limited by the embodiments described herein. On contrary, the embodiments of the present disclosure are provided to enable one skilled in the art to understand the present disclosure more thoroughly, and convey the scope of the present disclosure to one of ordinary skills in the art completely.

It is known for one skilled in the art that the embodiments of the present disclosure may be implemented as a system, a device, an apparatus, a method or a computer program product. Therefore, the embodiments of the present disclosure may be embodied as following forms: complete hardware, complete software (including firmware, resident software, microcodes, or the like), or a combination of hardware and software.

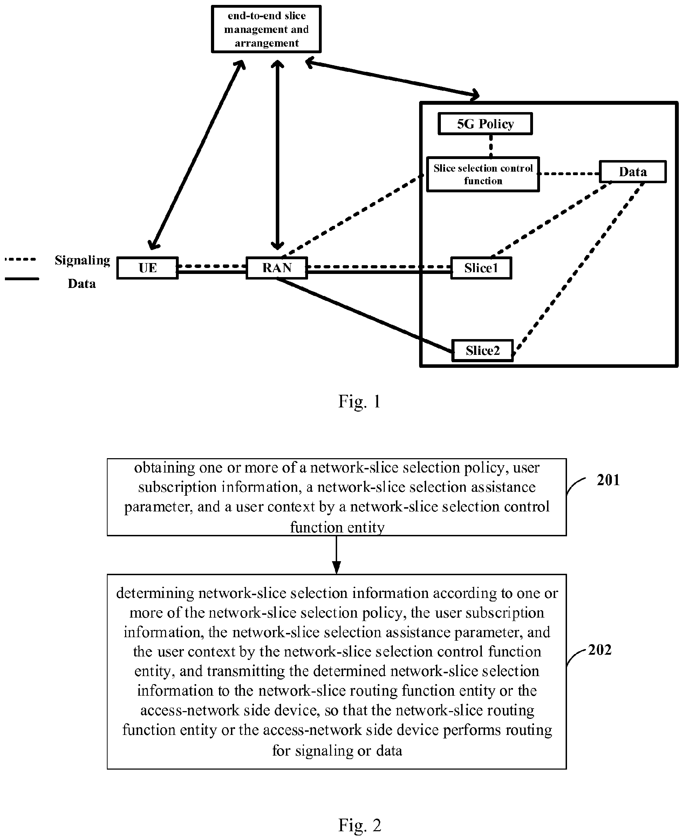

Referring to Fig. 1, Fig. 1 is a schematic diagram of a network slice architecture in an exemplary application scene according to some embodiments of the present disclosure. Network-slice selection refers to a method in which traffics of different scenes are differentiated and the traffics of the different scenes are guided to different network slices. A network slice is an end-to-end logical mobile network including functions of an access network and a core network. The network slice may also include the core network only.

The network-slice selection may include a network-slice selection control function entity and a routing function. The routing function may be at a Radio Access Network (RAN) side, and takes charge of forwarding signaling and data related to a network slice. The network-slice selection control function entity (Slice Selection Control Function (SSCF)) may be at the RAN side or at a Core Network (CN) side, or may be a network function entity independent from the RAN and the CN. The network-slice selection control function entity may determine network-slice selection information (or also known as information of a selected network slice) according to one or more of the following, and may feedback the network-slice selection information to the RAN so that the RAN may perform routing for signaling or data. It should be noted that, the network-slice selection information is a result of selection performed by the network-slice selection control function entity, and is embodied as an identifier of a control plane function or an identifier of a group of control plane functions of a selected network slice.

One or more of the information above may be (1) a network-slice selection assistance parameter, (2) user subscription information, (3) a user context (such as a cell identifier), and (4) a network-slice selection policy.
(1) the network-slice selection assistance parameter: the network-slice selection assistance parameter may be obtained from the RAN side, and may include a network-slice identifier, a service type, other network-slice selection assistance parameters, a network-slice descriptor, a tenant identifier, a UE Usage Type (UE USAGE TYPE), and the like. For example, the network-slice selection assistance parameter may be carried in an attach request.
   The network-slice identifier may include two parts: one of the parts is a network-slice type identifier (such as an identifier of an Enhance Mobile Broadband (eMBB) slice, or an identifier of an Internet of Things (IoT) slice), and the other of the parts is a network-slice instance (NSI) identifier (one type of network slices may include a plurality of entities, for example, the eMMB slice may include a plurality of instantiated entities).
   It should be noted that, in the embodiments, the network-slice identifier includes the network-slice type identifier and/or the network-slice instance identifier. In a roaming scene, the Core Network (CN) may establish a Fully Qualified Domain Name (FQDN) based on the network-slice identifier, and find a network slice corresponding to the network-slice identifier or a network-slice control plane function corresponding to the network-slice identifier. The above network-slice type identifier may be used to determine an operator (such as a China Mobile, a China Unicom, or a China Telecom) of a user and a network type (such as a Fourth Generation mobile communication (4G) network, a Third Generation mobile communication (3G) network, or the like). After a Public Land Mobile Network (PLMN) corresponding to the network-slice type identifier is determined, an operator of a visited network may, according to the network-slice instance identifier, enable the user to access a network slice corresponding to the network-slice instance identifier (instance id).
(2) the user subscription information: user subscription data may be obtained from a subscription database.
(3) the user context (such as a cell identifier or the like): the user context may be an independent type of selection information, and may also be incorporated in the network-slice selection assistance parameter and obtained from the RAN side.
(4) the network-slice selection policy: the network-slice selection policy may be a network-slice selection policy based on a user type, a service type or the like. The network-slice selection policy may be obtained from a network policy function of a Fifth Generation (5G) mobile communication (corresponding to a 5G Policy network function in Fig. 1), or may be a selection policy configured from the SSCF. For example, the network-slice selection policy may specific that, in case of network congestion, a user having a high priority may access a network slice, but a user having a low priority cannot access the network slice, and the present disclosure is not limited thereto.

In case of selecting a network slice for a first time, the user may transfer, to the RAN, the network-slice selection assistance parameter (such as a network-slice identifier (Slice-ID) or a service type, or the like) carried in the user; and the RAN may visit an independent network-slice selection control function entity to obtain the network-slice selection information, and perform routing for signaling or data according to the network-slice selection information. It should be noted that, the network-slice selection information may be an ID of a control plane function or an ID of a group of control plane functions (also known as a control plane function Group-ID) of a network slice accessed by a user, and may be understood as an entry address of the network slice. The control plane function of a network slice may be a network function in the network slice, or may be a group of network functions. Thus, the network-slice selection information from the network-slice selection control function entity may be an ID of one control plane function or an ID of a group of control plane functions.

A network-slice selection method according to exemplary embodiments of the present disclosure is described hereinafter by referring to Fig. 2 and in combination with the network architecture of the application scene shown in Fig. 1. It should be noted that the above application scene is shown for purpose of understanding spirits and principles of the present disclosure, the embodiments of the present disclosure are not limited thereto. On contrary, the embodiments of the present application may be applied to any suitable scene.

Figure 2 schematically shows a flowchart of a network-slice selection method according to some embodiments of the present disclosure. The network-slice selection method shown in Fig.2 may include a step 201 and a step 202.

Step 201: obtaining one or more of a network-slice selection policy, user subscription information, a network-slice selection assistance parameter, and a user context by a network-slice selection control function entity.

Optionally, the network-slice selection control function entity receives an attach request transmitted by a network-slice routing function entity or an access network, wherein the attach request carries the network-slice selection assistance parameter and/or the user context. The network-slice selection control function entity obtains a network-slice selection policy from a Fifth Generation (5G) policy network function entity, and obtains user subscription information from a subscription database (DATA).

The user subscription information means user subscription data obtained from the subscription database. The user subscription data may include a network-slice type, a network-slice identifier or a service type ordered and/or subscribed by a user. It should be noted that specific contents of the user subscription data are not limited in the present disclosure.

The network-slice selection assistance parameter may include one or more of the network-slice identifier (Slice-ID), the service type, the network-slice descriptor, the tenant identifier and the UE Usage Type. The service type may be a Internet of Things (IoT) service, a high-bandwidth service, or a low latency service, or the like. The user context may be the cell identifier or the like, and the present disclosure is not limited thereto.

The network-slice identifier may include two parts. One of the parts is the network-slice type identifier (such as the identifier of the Enhance Mobile Broadband (eMBB) slice, or the identifier of the Internet of Things (IoT) slice), and the other of the parts is the network-slice instance (NSI) identifier (one type of network slices may include a plurality of entities, for example, the eMMB slice my include a plurality of instantiated entities).

It should be noted, in the embodiments, the network-slice identifier may include the network-slice type identifier and/or the network-slice instance identifier. In the roaming scene, the Core Network (CN) may establish the Fully Qualified Domain Name (FQDN) based on the network-slice identifier, and find a network slice corresponding to the network-slice identifier or a network-slice control plane function corresponding to the network-slice identifier. The network-slice type identifier may be used to determine the operator (such as the China Mobile, the China Unicom, or the China Telecom) of the user and the network type (such as a Fourth Generation (4G) network or a Third Generation (3G) network) when the user is roaming. After the Public Land Mobile Network (PLMN) corresponding to the network-slice type identifier is determined, the operator of the visited network may enable, according to the network-slice instance identifier, the user to access a network slice corresponding to the network-slice instance identifier (instance id).

The routing function may be at the Radio Access Network (RAN) side, or at the Core Network (CN) side, or between the RAN and the CN, or be combined with the network-slice selection control function entity, and takes charge of forwarding signaling and data related to the network slice. The network-slice selection control function entity may be at the RAN side or at the CN side, or may be a network function entity independent from the RAN and the CN.

Step 202: determining network-slice selection information according to one or more of the network-slice selection policy, the user subscription information, the network-slice selection assistance parameter, and the user context by the network-slice selection control function entity, and transmitting the determined network-slice selection information to the network-slice routing function entity or the access-network side device, so that the network-slice routing function entity or the access-network side device may perform routing for signaling or data.

For example, the network-slice selection control function entity may determine the network-slice selection information according to the network-slice selection policy, or according to the user subscription information, or according to network-slice selection assistance parameter, or according to the user context, or according to the network-slice selection policy, the user subscription information, the network-slice selection assistance parameter and the user context. The present disclosure is not limited thereto.

The network-slice selection policy means a network-slice selection policy based on the user type or the service type, may be obtained from a Fifth Generation (5G) network policy function (corresponding to the 5G Policy network function in Fig. 1), or may be a network-slice selection policy configured for the SSCF, and the present disclosure is not limited thereto.

The network-slice selection information is a result of selection performed by the network-slice selection control function entity, and may include an identifier (a control plane function ID) of a control plane function or an identifier (a control plane function Group-ID) of a group of control plane functions of a network slice accessed by the UE. The identifier of the control plane function or the identifier of the group of control plane functions of the network slice corresponds to the network-slice identifier of the network slice. That is, the identifier of the control plane function or the identifier of the group of control plane functions corresponding to the network slice may be searched according to the network-slice identifier.

In the embodiments of the present disclosure, the network-slice selection control function entity determines the network-slice selection information according to one or more of the network-slice selection policy, the user subscription information, the network-slice selection assistance parameter and the user context when network-slice selection is needed to be performed, and thereby the network-slice selection may be performed flexibly according to the network-slice identifier, the network-slice selection policy, the cell identifier or the service type, without needing to configure a port of a network slice specifically, and different network services may correspond to different network slices, influences among the network services may be avoided, and a network stability is higher. No signaling interaction exists between the network-slice selection control function entity and network slices and a quantity of external interfaces of the network slices is reduced.

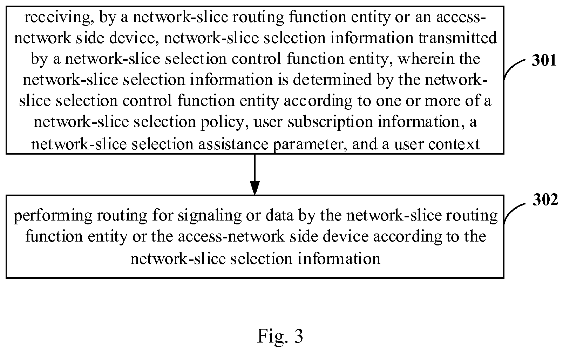

A network-slice selection method according to exemplary embodiments of the present disclosure is described hereinafter by referring to Fig. 3 and in combination with the network architecture in the application scene shown in Fig. 1 of the present disclosure. It should be noted that the above application scene is shown for purpose of understanding spirits and principles of the present disclosure, the embodiments of the present disclosure are not limited thereto. On contrary, the embodiments of the present application may be applied to any suitable scene.

Figure 3 schematically shows a flowchart of a network-slice selection method according to some embodiments of the present disclosure. The network-slice selection method shown in Fig.2 may include a step 301 and a step 302.

Step 301: receiving, by a network-slice routing function entity or an access-network side device, network-slice selection information transmitted by a network-slice selection control function entity, wherein the network-slice selection information is determined by the network-slice selection control function entity according to one or more of a network-slice selection policy, user subscription information, a network-slice selection assistance parameter, and a user context.

For example, the network-slice selection control function entity may determine the network-slice selection information according to the network-slice selection policy, or according to the user subscription information, or according to network-slice selection assistance parameter, or according to the user context, or according to the network-slice selection policy, the user subscription information, the network-slice selection assistance parameter and the user context. The present disclosure is not limited thereto.

The network-slice selection assistance parameter may be obtained from an attach request from the RAN. However, the present disclosure is not limited thereto.

The user context may also be obtained from the attach request from the RAN. However, the present disclosure is not limited thereto.

The user subscription information means user subscription data obtained from the subscription database. The user subscription data may include a network-slice type, a network-slice identifier or a service type ordered and/or subscribed by the user. It should be noted that specific contents of the user subscription data in the present disclosure are not limited.

The network-slice selection policy may mean a network-slice selection policy based on a user type or the service type, may be obtained from the Fifth Generation (5G) network policy function (corresponding to the 5G Policy network function in Fig. 1), or may be a network-slice selection policy configured for the SSCF. However, the present disclosure is not limited thereto.

The network-slice selection assistance parameter may include any one of the network-slice identifier (Slice-ID (Slice Identifier)), the service type, the network-slice descriptor, and the tenant identifier. The service type may be the Internet of Things (IoT) service, a high-bandwidth service, or a low latency service, or the like. The user context may be the cell identifier or the like.

The network-slice identifier may include two parts: one of the parts is the network-slice type identifier (such as the identifier of the Enhance Mobile Broadband (eMBB) slice, or the identifier of the Internet of Things (IoT) slice), and the other of the parts is the network-slice instance identifier (one type of network slices may include a plurality of entities, for example, the eMMB slice my include a plurality of instantiated entities).

It should be noted, in the embodiments, the network-slice identifier may include the network-slice type identifier used to determine an operator and a network type and the network-slice instance identifier used to determine a specific network slice. In the roaming scene, the Core Network may generate a Fully Qualified Domain Name (FQDN) according to the network-slice identifier, and find the network slice corresponding to the network-slice identifier or the network-slice control plane function corresponding to the network-slice identifier. The network-slice type identifier may be used to determine the operator (such as the China Mobile, the China Unicom, or the China Telecom) of the user and the network type (such as the Fourth Generation (4G) network or the Third Generation (3G) network) when the user is roaming. After the Public Land Mobile Network (PLMN) is selected according to the network-slice type identifier, the operator of the visited network may enable the user to access the network slice corresponding to the network-slice instance identifier (instance id) according to the network-slice instance identifier.

The routing function may be at the Radio Access Network (RAN), or at the Core Network (CN), or between the RAN and the CN, or be combined with the network-slice selection control function entity, and takes charge of forwarding signaling and data related to the network slice. The network-slice selection control function entity may be at the RAN or at the CN, or may be a network function entity independent from the RAN and the CN.

The network-slice selection information is a result of selection performed by the network-slice selection control function entity, and may include an identifier of a control plane function or an identifier of a group of control plane functions of a network slice corresponding to a service requirement accessed by a user. The identifier of the control plane function or the identifier of the group of control plane functions of the network slice corresponds to the network-slice identifier of the network slice. That is, the identifier of the control plane function or the identifier of the group of control plane functions of the network slice may be searched according to the network-slice identifier.

Step 302: performing routing for signaling or data by the network-slice routing function entity or the access-network side device according to the network-slice selection information.

Optionally, in some embodiments, the method further includes: obtaining a network-slice selection correspondence table from the network-slice selection control function entity by the network-slice routing function entity or the access-network side device, wherein the network-slice selection correspondence table records a correspondence relation between the network-slice selection assistance parameter or the network-slice identifier and the network-slice selection information.

In some embodiments, when the UE accesses a network slice once more, the UE may be directly led to an entry point of the network slice corresponding to the network-slice selection assistance parameter according to the network-slice selection correspondence table, without needing to visit the network-slice selection control entity again and obtain the correspondence relation.

Optionally, in some embodiments, the method further includes: receiving the attach request by the network-slice routing function entity or the access-network side device, wherein the attach request carries the network-slice selection assistance parameter; determining the network-slice selection information by the network-slice routing function entity or the access-network side device according to the network-slice selection correspondence table and the network-slice selection assistance parameter; and performing the routing for the signaling or the data by the network-slice routing function entity or the access-network side device according to the network-slice selection information.

In some embodiments, in case that a selection error occurs due to expiration of the network-slice selection correspondence table configured at the RAN side or a change of an order relation or a subscription relation of the UE, a fault-tolerance mechanism for selecting a network slice permits the RAN to visit the network-slice selection control function entity again, obtain correct network-slice selection information, select a correct network slice and update the network-slice selection correspondence table at the RAN side.

Optionally, in some embodiments, the method further includes: obtaining a new correspondence relation between the network-slice selection assistance parameter and the network-slice selection information from the network-slice selection control function entity by the network-slice routing function entity or the access-network side device; and updating the network-slice selection correspondence table by the network-slice routing function entity or the access-network side device using the new correspondence relation between the network-slice selection assistance parameter and the network-slice selection information.

In the embodiments, the above correspondence needs to be updated when the selection error occurs due to the expiration of the network-slice selection correspondence table configured at the RAN side or the change of the order relation / the subscription relation of the UE. The present disclosure is not limited thereto.

Optionally, in some embodiments, the method further includes: in case that the network-slice routing function entity or the access-network side device receives information about attach errors, re-transmitting the network-slice selection assistance parameter to the network-slice selection control function entity by the network-slice routing function entity, so as to obtain a correct result of the network-slice selection.

In the embodiments of the present disclosure, the network-slice selection control function entity determines the network-slice selection information according to one or more of the network-slice selection policy, the user subscription information, the network-slice selection assistance parameter and the user context when the network-slice selection is needed to be performed, and thereby the network slice selection may be performed flexibly according to the network-slice identifier, the network-slice selection policy, the cell identifier or the service type, without needing to configure a port of a network slice specifically, and different network services may correspond to different network slices, influence among the network services may be avoided, and the network stability is higher. No signaling interaction exists between the network-slice selection control function entity and network slices and a quantity of external interfaces of the network slices is reduced. Further, the network-slice selection correspondence table may be stored at the RAN side or by the network-slice routing function entity, and the network-slice selection information may be obtained directly through searching the network-slice selection correspondence table, so as to avoids a case in which the UE frequently visits the network-slice selection control function entity to obtain the network-slice selection information when the UE accesses network slices for multiple times.

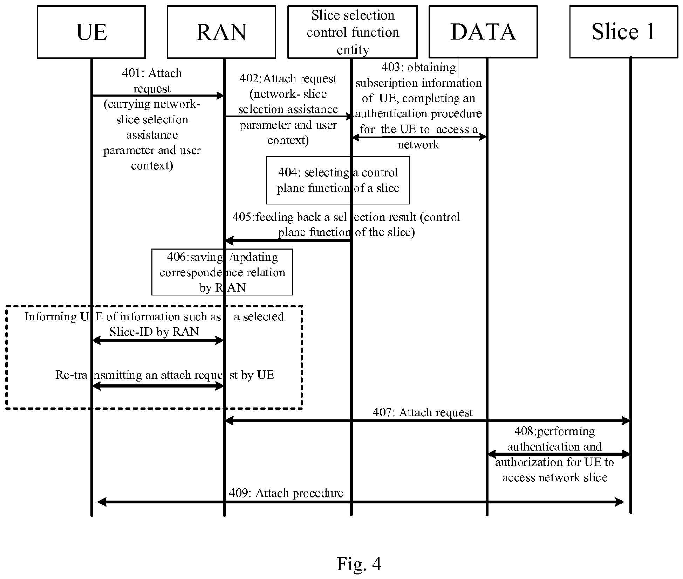

Referring to Fig.4, Fig. 4 shows a flowchart of selecting a network slice and attaching the network slice. Fig. 4 specifically shows steps 401 to 409.

Step 401: transmitting an attach request by a User Equipment (UE) to a Radio Access Network (RAN).

The UE transmits the network-slice selection assistance parameter to a base station in the RAN by incorporating the network-slice selection assistance parameter in the attach request, wherein the network-slice selection assistance parameter includes, but is not limited to, the network-slice identifier (Slice-ID), the service type, and so on.

Specifically, the UE transmits the attach request to the RAN. The attach request includes information such as an Attach Request Message, Radio Resource Control (RRC) parameters, or the like. The RRC parameters include the network-slice selection assistance parameter such as the Slice-ID, the service type, and the like.

The network-slice identifier may include two parts: one of the parts is the network-slice type identifier (such as the identifier of the Enhance Mobile Broadband (eMBB) slice, or the identifier of the Internet of Things (IoT) slice), and the other of the parts is the network-slice instance identifier (one type of network slices may include a plurality of entities, for example, the eMMB slice my include a plurality of instantiated entities).

It should be noted, in the embodiments, the network-slice identifier may include a network-slice type identifier and/or a network-slice instance identifier. In a roaming scene, a Core Network may establish a Fully Qualified Domain Name (FQDN) based on the network-slice identifier, and find a network slice corresponding to the network-slice identifier or a network slice control plane function corresponding to the network-slice identifier. The network-slice type identifier (slice type) may be used to determine an operator (such as the China Mobile, the China Unicom, or the China Telecom) of a user and a network type (such as a Fourth Generation (4G) network or a Third Generation (3G) network) when the user is roaming. After a Public Land Mobile Network (PLMN) corresponding to the network-slice type identifier is determined according to the network-slice type identifier, an operator of a visited network may enable, according to the network-slice instance identifier (instance id), the user to access a network slice corresponding to the network-slice instance identifier.

Step 402: transmitting the attach request to the network-slice selection control function entity by the RAN.

The RAN maintains a correspondence relation between the network-slice selection assistance parameter (such as the Slice-ID, the service type, and the like) carried in the UE and a corresponding network-slice control plane function (such as a corresponding network-slice control network element). The RAN may transmits, to the network-slice selection control function entity, the attach request carried by the UE, so that the network-slice selection control function entity obtains the network-slice selection information. The network-slice selection information includes, but is not limited to, an ID of a network-slice control plane function or an ID of a group of network-slice control plane functions (or also called a network-slice control plane function Group-ID) corresponding to the network-slice selection assistance parameter carried by the UE.

Optionally, the RAN may obtain the network-slice selection information by directly searching the network-slice selection correspondence table maintained by the RAN. The network-slice selection information may include, but is not limited to, an ID of a network-slice control plane function or an ID of a group of network-slice control plane functions corresponding to a network slice being selected. The network-slice selection correspondence table records a correspondence relation between network-slice selection assistance parameters or network-slice identifier and network-slice selection information. The network-slice selection information is a result of selection performed by the network-slice selection control function entity. The network-slice selection information may include an identifier (a control plane function ID) of a control plane function or an identifier (a control plane function Group-ID) of a group of control plane functions of a corresponding network slice.

Optionally, the RAN side is provided with capability of identifying whether a UE supports a network slice or not. If the UE does not support the network slice, the information carried by the UE does not have a field of the network-slice selection assistance parameter, and thus the RAN still transmits, to the NSSF, various messages carried by the UE. The NSSF may select a network slice suitable for the UE and feedbacks the selection of the network slice to the RAN. Thereafter, the RAN processes the attach request of the UE according to an attach processing procedure in a 4G EPC network architecture. If the UE supports the network slice, a message carried by the UE has the field of the network-slice selection assistance parameter. The field may be Null or carries a descriptor of the network-slice selection assistance parameter (such as the network-slice identifier, the service type, the tenant identifier, or the like).

If the UE supports the network slice, four scenes may exist according to whether the UE carries the network-slice selection assistance parameter or not and whether the RAN saves the network-slice selection correspondence table for the network-slice selection assistance parameter carried by the UE or not.

A first scene: the UE carries the network-slice selection assistance parameters and the RAN saves the network-slice selection correspondence table for the network-slice selection assistance parameter carried by the UE.

The network-slice selection correspondence table records the correspondence relation between the network-slice selection assistance parameter or the network-slice identifier and the network-slice selection information. In the first scene, after the RAN obtains the network-slice selection assistance parameter carried by the UE, the RAN selects a network slice directly according to the correspondence table maintained by the RAN, and then a step 407 is performed and steps 402-406 are not performed.

A second scene: the UE carries the network-slice selection assistance parameter and the RAN does not save the network-slice selection correspondence table for the network-slice selection assistance parameter carried by the UE.

The network-slice selection correspondence table records a correspondence relation between the network-slice selection assistance parameter or the network-slice identifier and the network-slice selection information. In the second scene, after the RAN receives the attach request from the UE, the RAN directly forwards the network-slice selection assistance parameter carried by the UE to the network-slice selection control function entity, and a network-slice selection procedure in steps 403-406 are performed.

A third scene: the UE does not carry the network-slice selection assistance parameter and the RAN does not save a correspondence table for a network slice with which the UE subscribes.

A fourth scene: the UE does not carry the network-slice selection assistance parameter and the RAN saves the correspondence table for the network slice with which the UE subscribes.

Solutions for the third scene and the fourth scenes are the same. i.e., the RAN forwards the attach request of the UE to the network-slice selection control function entity, and then the network-slice selection procedure in steps 403-406 is performed. Additionally, in the third scene, if the UE does not order/subscribe a service of any network slice, the UE may be rejected to access a network slice or be assigned a default network slice according to an operator's policy.

It should be noted that the solution for the third scene may also be (for example, in specific embodiments, the solution for the third scene may be determined by choosing one from two alternatives): optionally, when the UE does not carry the network-slice selection assistance parameter or the network slice identifier, the RAN notifies the UE about a network-slice identifier of a selected network slice after the RAN receives the network-slice identifier of the selected network slice; then the UE re-transmits the attach request, see the steps shown in a dashed box in Fig.4.

Step 403: obtaining order information/subscription information of the UE from a subscription database (DATA) by the network-slice selection control function entity, and completing an authentication procedure for the UE toe access a network.

The subscription database (DATA) stores subscription data and order information/subscription information of the UE. The order information/subscription information of the user includes a network-slice type , a network-slice identifier or a service type ordered and/or subscribed by the user.

For example, referring to an Evolved Packet Core (EPC) architecture, the network-slice selection control function entity transmits an authentication request to the subscription database (DATA); the subscription database (DATA) feedbacks current order information/subscription information (such as a list of Slice-IDs of network slices or a list of service types having been ordered/subscribed) of the UE. The network-slice selection control function entity determines whether the user may access a network slice by comparing the list fed back by the subscription database (DATA) with the network-slice selection assistance parameter carried by the UE, and the authentication procedure through which the user assesses the network slice is completed.

Step 404: selecting a suitable network slice by the network-slice selection control function entity according to one or more of the network-slice selection assistance parameter, the user subscription information, the user context and the corresponding network-slice selection policy, i.e. determining the network-slice selection information.

The network-slice selection control function entity maintains a selection rule for network-slice selection assistance parameters (such as Slice-IDs, service types, and the like) and network-slice control plane functions (such as an ID of a control plane function or an ID of a group of control plane functions corresponding to a network slice) matched with the network-slice selection assistance parameters. The selection rule specifies the correspondence relation between the network-slice selection assistance parameters and network slices. The selection rule is generated further in consideration of other selection information, and a suitable network slice is selected for the UE according to the network-slice selection assistance parameter, the user subscription information, the user context and the relevant network-slice selection policy provided by the user, wherein the relevant network-slice selection policy may be obtained from the 5G policy.

Step 405: transmitting the network-slice selection information to the RAN by the network-slice selection control function entity.

The network-slice selection information may include the ID of the control plane function or the ID of the group of control plane functions (also known as the control plane function Group-ID of a network slice) of a network slice.

Step 406: saving, by the RAN, a network-slice selection result fed back by the network-slice selection control function entity, or updating, by the RAN, the network-slice selection correspondence table previously maintained by the RAN.

The network-slice selection correspondence table records the correspondence relation between the network-slice selection assistance parameters (such as the Slice-IDs, the service types, and the like) and corresponding network-slice selection information. The network-slice selection information may include, but is not limited to, a network-slice control plane function (such as the ID of the control plane function or the control plane function Group-ID of a network slice).

Step 407: routing, by the RAN, signaling and data of the user to the network slice corresponding to the user.

When the RAN obtains the network-slice selection information from the network-slice selection control function entity, the RAN completes the network-slice selection procedure according to the network-slice selection information transmitted by the network-slice selection control function entity.

For example, in case that the network-slice selection information is one ID of a control plane function of the network slice, the RAN searches and obtains an IP address of a corresponding network function according to a Domain Name System (DNS). In case that the network-slice selection information is the control plane function Group-ID of the network slice, the RAN obtains loads on the control plane functions of the network slice in a current Pool and performs a load-balance operation, and then selects corresponding network-slice control plane functions by searching the DNS.

If the RAN has the correspondence relation between network-slice selection assistance parameters and a control plane function ID or control plane function Group-ID of a network slice, the steps 402-406 may not be performed, and the RAN directly selects a network slice according to the correspondence relation maintained by the RAN.

Step 408: performing authentication and authorization for the UE to access the network slice.

For example, the control plane function of the network slice interacts with the subscription database (DATA) to perform the authentication for the UE to access the network slice.

When the control plane function of the network slice sends an authentication request, the subscription database (DATA) may feedback subscription information of the user in the control plane function of the network slice in a current PLMN. The control plane function of the network slice determines whether the user may access the control plane function of the selected network slice according to the subscription information, and the authentication and the authorization for the UE to access the network slice are completed.

In such a case, a processing procedure for an erroneous selection of a network slice needs to be considered. Two scenes may exist possibly, i.e., a first scene and a second scene.

The first scene: the selection is failed, and the UE is prohibited from accessing the network slice. If the selection is made directly according to the correspondence relation maintained by the RAN without involvement of the network-slice selection control function entity, the selected network slice cannot match the UE in cases of the expiration of the correspondence relation configured by the RAN or the change of the subscription information of the UE, and thus the UE fails to access the network slice. In such a case, the RAN receives a message, i.e., "Attach Error", and re-transmits the network-slice selection assistance parameter to the network-slice selection control function entity so that the steps 402-406 are performed so as to obtain correct network-slice selection information, and subsequent Attach procedures may be performed.

The second scene: the selection is successfully, and the UE is allowed to access the network slice. A correct network slice is selected for the UE, and the subsequent Attach procedures may be performed.

Additionally, the authentication for the UE to access the network slice may also be performed after the network-slice selection control function entity selects the control plane function ID or the control plane function Group-ID of a network slice in the step 404.

Step 409: completing the subsequent Attach procedures.

In the embodiments, in case that the selection of a network slice is needed, the selection of the network slice may be performed flexibly based on the network-slice identifier or the service type, without needing to specifically configuring ports of the network slice. Furthermore, different network services correspond to different network slices, and thus influences among the network services are avoided, and the network stability is higher. No signaling interaction between the network-slice selection control function entity and the network slices exists when selecting a network slice, and a quantity of external interfaces of the network slices is reduced. Further, the network-slice selection correspondence table may be stored at the RAN side, and thus the case in which the UE frequently visits the network-slice selection control function entity to obtain the network-slice selection information is avoided when the UE accesses the network slices for multiple times.

Based on the above embodiments, when a new network slice is established in the network, an end-to-end network-slice management and arrangement function entity needs to configure a Slice-ID for the new network slice and a network-slice selection control function entity corresponding to the network slice, update the correspondence relation in the network-slice selection control function entity, and inform that the new network slice is added in the network.

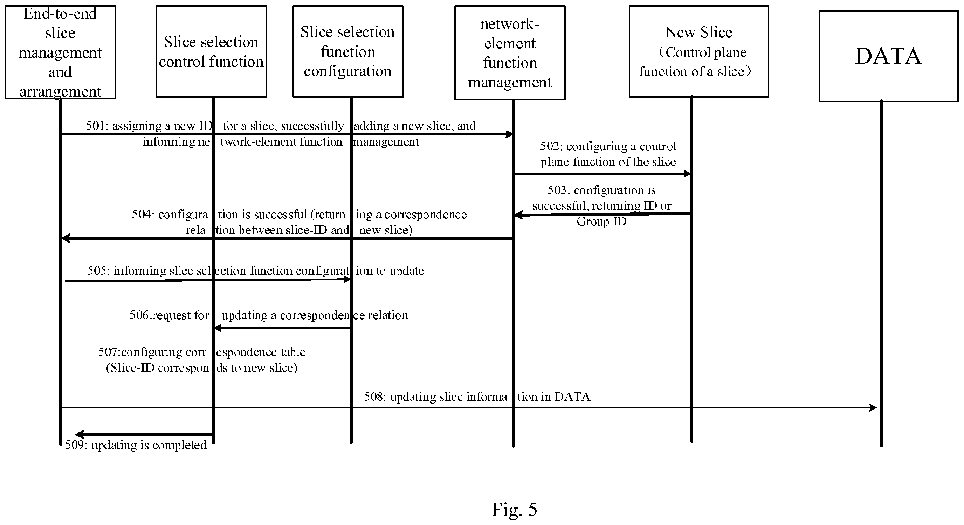

Referring to Fig.5, Fig. 5 shows a flowchart of adding a network slice. Fig. 5 specifically shows steps 501 to 509.

Step 501: generating the new network slice by the end-to-end network-slice management and arrangement function entity, and sending a network-slice addition instruction to a network-element function management entity to indicate that the new network slice has been added in the network.

Step 502: configuring a new control plane function ID or a new control plane function Group-ID for the new network slice, by the network-element function management entity.

Step 503: feeding back the configured control plane function ID or the configured control plane function Group-ID of the new network slice by the network-element function management entity.

Step 504: informing the end-to-end network-slice management and arrangement function entity that the new network slice is successfully configured.

Step 505: instructing, by the end-to-end network-slice management and arrangement function entity, a network-slice selection function configuration module to update a correspondence relation for the network slice.

Step 506: transmitting, by the network-slice selection function configuration module, a request for updating a correspondence relation between a Slice-ID and the control plane function ID or the control plane Group-ID of the new network slice in the network-slice selection control function entity.

The network-slice selection control function entity stores the network-slice selection correspondence table which records the correspondence relation between the network-slice selection assistance parameters (such as the Slice-IDs, the service types, and the like) and the network-slice selection information corresponding to the network-slice selection assistance parameters. The network-slice selection information is a result of selection performed by the network-slice selection control function entity, and may include an identifier (a control plane function ID) of a control plane function or an identifier (a control plane function Group-ID) of a group of control plane functions of a corresponding network slice.

Step 507: performing the updating by the network-slice selection control function entity according to information transmitted by the end-to-end network-slice management and arrangement function entity.

Step 508: updating network-slice selection information (network-slice selection information of the new network slice, an order relation/a subscription relation of the network slice) in the subscription database (DATA) by the end-to-end network-slice management and arrangement function entity.

Step 509: completing the updating.

In the embodiments, in a process of selecting, different network services correspond to different network slices, and thus influences among the network services are avoided, and the network stability is higher. The uniform end-to-end network-slice management and arrangement function entity may update and maintain network slices flexibly and quickly, and different network slices are separated from each other.

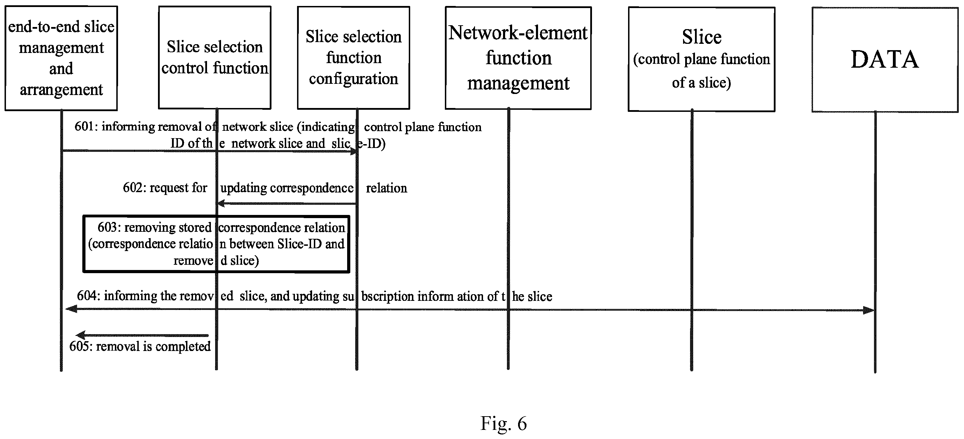

Based on the above embodiments, referring to Fig. 6, Fig. 6 is a flowchart of removing a network slice in some embodiments of the present disclosure. When one network slice is removed from the network, relevant network functions need to be informed of removing a Slice-ID and a correspondence relation of the network slice. A procedure of removing the network slice includes steps 601 to 605.

Step 601: initiating removal of the network slice by the end-to-end network-slice management and arrangement function entity, and informing the network-slice selection function configuration module of information (such as the Slice-ID, the control plane function ID or the control plane function Group-ID corresponding to the network slice) about the network slice needing to be removed.

Step 602: transmitting, by the network-slice selection function configuration module, an instruction for updating the correspondence relation in the network-slice selection control function entity.

Step 603: removing, by the network-slice selection control function entity, the correspondence relation (such as the correspondence relation between the Slice-ID and the removed network slice) stored in the network-slice selection control function entity.

Step 604: removing corresponding order relation/subscription relation of the network slice in the subscription database (DATA) by the end-to-end network-slice management and arrangement function entity.

Step 605: completing a procedure of removing the network slice.

In the embodiments, different network services correspond to different network slices, and thus influences among the network services are avoided, and the network stability is higher. The end-to-end network-slice management and arrangement function entity may maintain network slices flexibly and quickly, and different network slices are separated from each other.

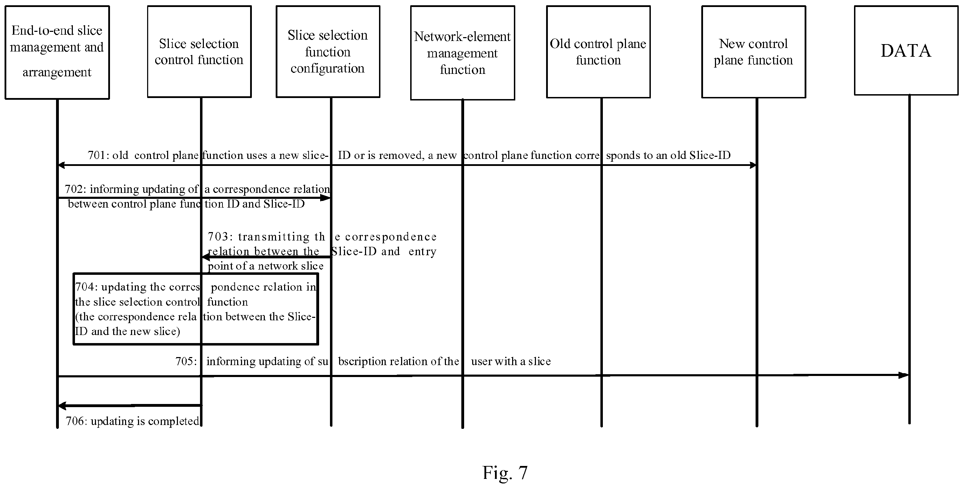

Based on the above embodiments, referring to Fig. 7, Fig. 7 is a flowchart of updating a network slice in some embodiments of the present disclosure. The Slice-ID is not changed, and the control plane function ID or the network-slice control plane function Group-ID of the corresponding network slice is changed (the control plane function ID or the control plane function Group-ID of the corresponding network slice is updated). When a network slice needs to be updated and a network-slice control plane function corresponding to a network-slice identifier (Slice-ID) of the network slice, the network-slice selection control function entity needs to be informed through performing corresponding steps, and the correspondence relation or the Slice-ID of the network slice in the network-slice selection control function entity and the RAN needs to be modified in time, and the correspondence relation between network-slice control plane functions and the Slice-ID needs to be updated. The method shown in Fig.7 specifically includes steps 701 to 706.

Step 701: removing an old network slice or configuring a new network-slice identifier (Slice-ID), and assigning a new control plane function ID or a new control plane function Group-ID to a new network slice, wherein a new network-slice control plane function corresponds to a previous Slice-ID.

Step 702: updating a correspondence relation between the previous Slice-ID and the control plane function ID or the control plane function Group-ID of the new network slice by the end-to-end network-slice management and arrangement function entity.

Step 703: transmitting, by the network-slice selection function configuration module, the correspondence relation to the network-slice selection control function entity.

Step 704: updating the new correspondence relation (the Slice-ID corresponds to the control plane function ID or the control plane function Group-ID corresponding to the new network slice) by the network-slice selection control function entity.

Step 705: informing, by the end-to-end network-slice management and arrangement function entity, the subscription database (DATA) of changing order /subscription relations of the user.

Step 706: completing updating the network slice.

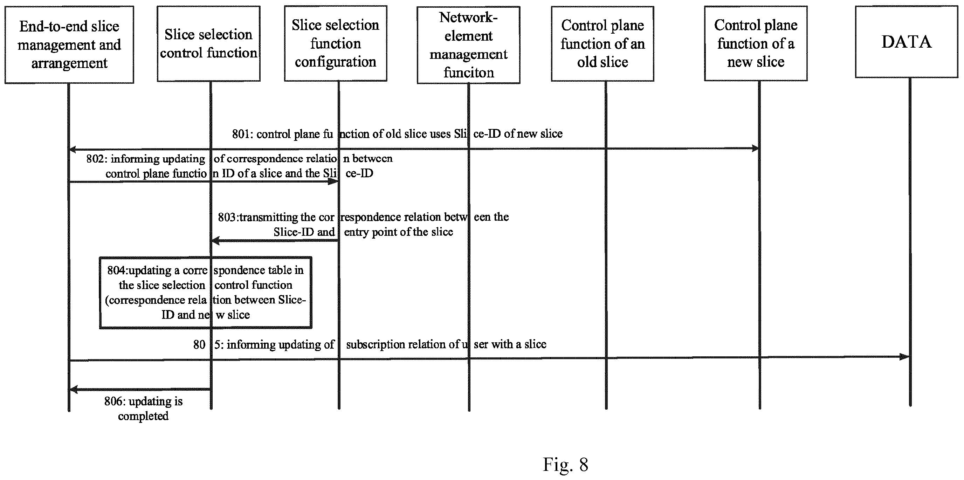

Referring to Fig. 8, Fig. 8 is a flowchart of updating a network slice in some embodiments of the present disclosure. In case that a network slice needs to be updated, an old network-slice identifier Slice-ID corresponds to a new network slice, an old network slice needs to be assigned a new Slice-ID, the network-slice selection control function entity needs to be informed through corresponding steps. The correspondence relations or the Slice-IDs of network slices in the network-slice selection control function entity and the RAN needs to be modified in time, and the correspondence relation between the network-slice control plane functions and the Slice-IDs needs to be updated. The method shown in Fig.8 specifically includes steps 801 to 806.

Step 801: removing the old network slice or configuring the new network-slice identifier Slice-ID for the old network slice.

Step 802: updating the correspondence relation between a previous Slice-ID and the control plane function ID or the control plane function Group-ID of the new network slice by the end-to-end network-slice management and arrangement function entity.

Step 803: transmitting, by the network-slice selection function configuration module, the correspondence relation to the network-slice selection control function entity.

Step 804: updating the new correspondence relation (the Slice-ID corresponds to the control plane function ID or the control plane function Group-ID of the new network slice) by the network-slice selection control function entity.

Step 805: informing the subscription database (DATA) of changing order relation/subscription relation of the user by the end-to-end network-slice management and arrangement function entity.

Step 806: completing updating the network slice.

It should be noted that, the network-slice selection function configuration module and the network-element management module may be two network function modules independent from each other, or be combined as a single network function module which is similar to a relevant network management unit.

It should be noted that, the network-slice selection function configuration module may also be a function in the end-to-end network-slice management and arrangement function entity, and a network-slice selection function is achieved by the end-to-end network-slice management and arrangement function entity.

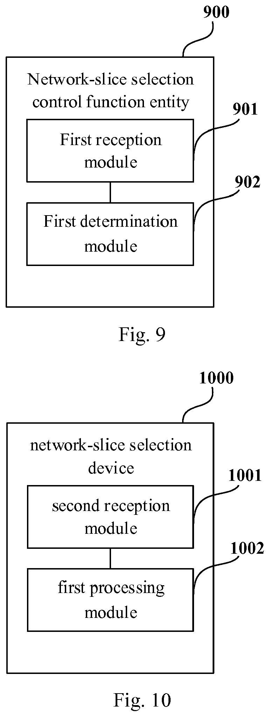

Referring to Fig.9, Fig. 9 is a block diagram of a network-slice selection control function entity in some embodiments of the present disclosure. The network-slice selection control function entity 900 includes a first reception module 901 and a first determination module 902.

The first reception module 901 is configured to obtain one or more of a network-slice selection policy, user subscription information, a network-slice selection assistance parameter, and a user context.

The first determination module 902 is configured to determine network-slice selection information according to one or more of the network-slice selection policy, the user subscription information, the network-slice selection assistance parameter, and the user context, and transmit the determined network-slice selection information to the network-slice routing function entity so that the network-slice routing function entity may perform routing for signaling or data.

Optionally, the first reception module 901 is configured to receive the attach request transmitted by the network-slice routing function entity or the access-network side device, wherein the attach request carries the network-slice selection assistance parameter and/or the user context.

Optionally, the first reception module 901 is configured to obtain the network-slice selection policy from the 5G policy network function entity.

Optionally, the first reception module 901 is configured to obtain subscription information of the user from the subscription database DATA.

Optionally, in the embodiments, the network-slice routing function entity may be at the Radio Access Network (RAN), or at the Core Network (CN), or between the RAN and the CN, or be combined with the network-slice selection control function entity, and the network-slice selection control function entity is at the RAN, or at the CN, or is a network function entity independent from the RAN and the CN.

Optionally, in the embodiments, the network-slice selection assistance parameter may include any one of a network-slice identifier (Slice-ID), a service type, a network-slice descriptor, a UE Usage Type, and a tenant identifier.

Optionally, the network-slice identifier may include a network-slice type identifier and/or a network-slice instance identifier.

The network-slice identifier may include two parts: one of the parts is the network-slice type identifier (such as an identifier of an Enhance Mobile Broadband (eMBB) slice, or an identifier of an Internet of Things (IoT) slice), and the other of the parts is the network-slice instance identifier (one type of network slices may include a plurality of entities, for example, the eMMB slice may include a plurality of instantiated entities).

It should be noted that, in the embodiments, the network-slice identifier includes the network-slice type identifier and the network-slice instance identifier. In a roaming scene, the Core Network (CN) may establish the Fully Qualified Domain Name (FQDN) based on the network-slice identifier, and find a network slice corresponding to the network-slice identifier or a network-slice control plane function corresponding to the network-slice identifier. The above network-slice type identifier (slice type) may be used to determine an operator (such as a China Mobile, a China Unicom, or a China Telecom) of a user and a network type (such as a 4G network, a 3G network, or the like). After a Public Land Mobile Network (PLMN) corresponding to the network-slice type identifier is determined, an operator of a visited network may, according to the network-slice instance identifier, enable the user to access a network slice corresponding to the network-slice instance identifier (instance id).

Optionally, in the embodiments, the network-slice selection information may be an ID of a control plane function or an ID of a group of control plane functions of a network slice accessed by a user.

When network-slice selection is needed to be performed, the network-slice selection may be performed flexibly according to the network-slice identifier or the service type, without needing to configure a port of a network slice specifically, and different network services may correspond to different network slices, influences among the network services may be avoided, and a network stability is higher. No signaling interaction exists between the network-slice selection control function entity and network slices and a quantity of external interfaces of the network slices is reduced.

Referring to Fig. 10, Fig. 10 is a block diagram of a network-slice selection device in some embodiments of the present disclosure. The device may be a network-slice routing function entity or an access-network side device. The device 1000 includes a second reception module 1001 and a first processing module 1002.

The second reception module 1001 is configured to receive network-slice selection information transmitted by the network-slice selection control function entity, wherein the network-slice selection information is determined by the network-slice selection control function entity according to one or more of the network-slice selection policy, the user subscription information, the network-slice selection assistance parameter, and the user context.

The first processing module 1002 is configured to perform routing for signaling or data according to the network-slice selection information.

Optionally, in the embodiments, the network-slice routing function entity further includes a first transmission module. The first transmission module is configured to transmit the network-slice identifier to the UE so that the UE updates the network-slice identifier stored by the UE according to the network-slice identifier received by the UE.

Optionally, in the embodiments, the network-slice selection assistance parameter and/or the user context are obtained by the network-slice selection control function entity from the attach request (from the network-slice routing function entity or the access-network side device) received by the network-slice selection control function entity.

The network-slice selection policy is obtained by the network-slice selection control function entity from the 5G policy network function entity.

The user subscription information is obtained from the subscription database by the network-slice selection control function entity.

Optionally, in the embodiments, the network-slice routing function entity may be at the Radio Access Network (RAN), or at the Core Network (CN), or between the RAN and the CN, or be combined with the network-slice selection control function entity. The network-slice selection control function entity is at the RAN, or at the CN, or is a network function entity independent from the RAN or the CN.

Optionally, in the embodiments, the network-slice selection assistance parameter may include any one of the network-slice identifier (Slice-ID), the service type, the network-slice descriptor, the UE Usage Type, and the tenant identifier.

Optionally, the network-slice identifier may include the network-slice type identifier and/or the network-slice instance identifier.

The network-slice identifier may include two parts: one of the parts is the network-slice type identifier (such as the identifier of the Enhance Mobile Broadband (eMBB) slice, or the identifier of the Internet of Things (IoT) slice), and the other of the parts is the network-slice instance identifier (one type of network slices may include a plurality of entities, for example, the eMMB slice may include a plurality of instantiated entities).

It should be noted that, in the embodiments, the network-slice identifier includes the network-slice type identifier and the network-slice instance identifier. In the roaming scene, the Core Network (CN) may establish the Fully Qualified Domain Name (FQDN) based on the network-slice identifier, and find a network slice corresponding to the network-slice identifier or the network-slice control plane function corresponding to the network-slice identifier. The above network-slice type identifier (slice type) may be used to determine the operator (such as the China Mobile, the China Unicom, or the China Telecom) of a user and a network type (such as the 4G network, the 3G network, or the like). After a Public Land Mobile Network (PLMN) is determined according to the network-slice type identifier, an operator of a visited network may, according to the network-slice instance identifier, enable the user to access a network slice corresponding to the network-slice instance identifier (instance id).

Optionally, in the embodiments, the network-slice selection information is an identifier of a control plane function or an identifier of a group of control plane functions of a network slice accessed by the UE.

Optionally, the identifier of the control plane function or the identifier of the group of control plane functions of the network slice corresponds to the network-slice identifier of the network slice.

Optionally, in some embodiments, the network-slice routing function entity further includes a storage module. The storage module is configured to obtain a network-slice selection correspondence table from the network-slice selection control function entity, wherein the network-slice selection correspondence table records the correspondence relation between the network-slice selection assistance parameter or the network-slice identifier and the network-slice selection information.

Optionally, in some embodiments, the network-slice routing function entity further includes a third reception module, a second determination module, and a second processing module. The third reception module is configured to receive the attach request; the second determination module is configured to determine the network-slice selection information according to the network-slice selection correspondence table and the attach request; and the second processing module is configured to perform routing for signaling or data according to the network-slice selection information.

Optionally, in some embodiments, the network-slice routing function entity further includes a fourth reception module and a updating module. The fourth reception module is configured to obtain a new correspondence relation between the network-slice selection assistance parameter and the network-slice selection information from the network-slice selection control function entity; and the updating module is configured to update the network-slice selection correspondence table using the new correspondence relation between the network-slice selection assistance parameter and the network-slice selection information.

Optionally, the network-slice routing function entity further includes a re-transmission module. The re-transmission module is configured to, in case that information about an attach error is received, re-transmit the network-slice selection assistance parameter to the network-slice selection control function entity, so as to obtain a correct network-slice selection result.

In case that the selection of a network slice is needed, the selection of the network slice may be performed flexibly based on the network-slice identifier or the service type, without needing to specifically configuring ports of the network slice. Furthermore, different network services correspond to different network slices, and thus influences among the network services are avoided, and the network stability is higher. No signaling interaction between the network-slice selection control function entity and network slices exists, and a quantity of external interfaces of the network slices is reduced. Further, the network-slice selection correspondence table may be stored at the RAN side, and the network-slice selection information may be obtained by directly searching the network-slice selection correspondence table. Thus, the case in which the UE frequently visits the network-slice selection control function entity to obtain the network-slice selection information is avoided when the UE accesses the network slices for multiple times.

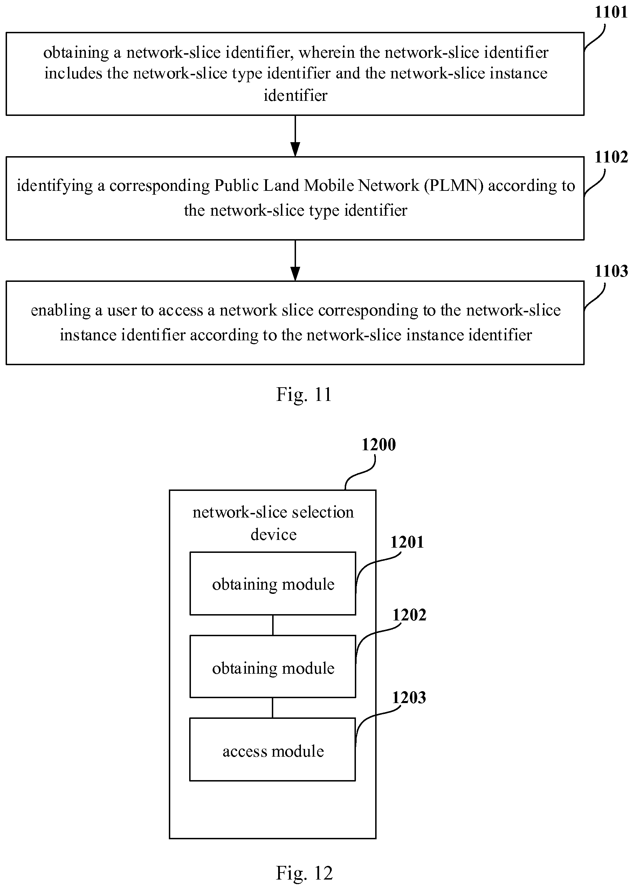

Referring to Fig. 11, Fig. 11 is a flowchart of a network-slice selection method in some embodiments of the present disclosure. The network-slice selection method shown in Fig. 11 may include steps 1101 to 1103.

Step 1101: obtaining a network-slice identifier, wherein the network-slice identifier includes the network-slice type identifier and the network-slice instance identifier.

The network-slice identifier may include two parts: one of the parts is the network-slice type identifier (such as the identifier of the Enhance Mobile Broadband (eMBB) slice, or the identifier of the Internet of Things (IoT) slice), and the other of the parts is the network-slice instance identifier (one type of network slices may include a plurality of entities, for example, the eMMB slice my include a plurality of instantiated entities).

Step 1102: identifying a corresponding Public Land Mobile Network (PLMN) according to the network-slice type identifier.

Optionally, an operator and a network type may be determined according to the network-slice type identifier; and the corresponding PLMN is identified according to the determined operator and the network type.

Step 1103: enabling a user to access a network slice corresponding to the network-slice instance identifier according to the network-slice instance identifier.

In the roaming scene, the Core Network may establish the Fully Qualified Domain Name (FQDN) based on the network-slice identifier, and find a network slice corresponding to the network-slice identifier or a control plane function corresponding to the network-slice identifier. The network-slice type identifier (slice type) may be used to determine the operator (such as the China Mobile, the China Unicom, or the China Telecom) of the user and the network type (such as a 4G network, a 3G network, or the like) when the user is roaming. After the Public Land Mobile Network (PLMN) corresponding to the network-slice type identifier is determined according to the network-slice type identifier, an operator of a visited network may enable, according to the network-slice instance identifier (instance id), the user to access a network slice corresponding to the network-slice instance identifier.

Referring to Fig. 12, Fig. 12 is a block diagram of a network-slice selection device in some embodiments of the present disclosure. The device 1200 includes an obtaining module 1201, a selection module 1202, and an access module 1203. The obtaining module 1201 is configured to obtain the network-slice identifier, wherein the network-slice identifier includes the network-slice type identifier and the network-slice instance identifier. The selection module 1202 is configured to identify a corresponding Public Land Mobile Network (PLMN) according to the network-slice type identifier. The access module 1203 is configured to enable a user to access a network slice corresponding to the network-slice instance identifier according to the network-slice instance identifier.

Optionally, the selection module is further configured to determine the operator and the network type according to the network-slice type identifier, and identify the corresponding PLMN according to the determined operator and the network type.

In the roaming scene, the Core Network may establish the Fully Qualified Domain Name (FQDN) based on the network-slice identifier, and find a network slice corresponding to the network-slice identifier or a control plane function corresponding to the network-slice identifier. The network-slice type identifier (slice type) may be used to determine the operator (such as the China Mobile, the China Unicom, or the China Telecom) of the user and the network type (such as a 4G network, a 3G network, or the like) when the user is roaming. After the Public Land Mobile Network (PLMN) corresponding to the network-slice type identifier is determined according to the network-slice type identifier, an operator of a visited network may enable, according to the network-slice instance identifier (instance id), the user to access a network slice corresponding to the network-slice instance identifier.

The present disclosure further provides a network-slice selection method. The network-slice selection method may include steps 1301 and 1302.

Step 1301: in case that a message carried by a UE does not include a field of a network-slice selection assistance parameter, transmitting the message to a network-slice selection control function entity by a network-slice routing function entity or an access-network side device, so that the network-slice selection control function entity selects a network slice suitable for the UE and transmits a network-slice identifier of the selected network slice to the network-slice routing function entity or the access-network side device.

Step 1302: transmitting, by the network-slice routing function entity or the access-network side device to the UE, the network-slice identifier of the network slice selected by the network-slice routing function entity or the access-network side device, so that the UE re-initiates an attach request.

The present disclosure further provides a network-slice selection device. The network-slice selection device includes a second transmission module and a third processing module. The second transmission module is configured to, in case that the message carried by the UE does not include the field of the network-slice selection assistance parameter, transmit the message to the network-slice selection control function entity, so that the network-slice selection control function entity selects a network slice suitable for the UE and transmits the network-slice identifier of the selected network slice to the network-slice routing function entity or the access-network side device. The third processing module is configured to transmit, to the UE, the network-slice identifier of the network slice selected by the network-slice routing function entity or the access-network side device, so that the UE re-initiates the attach request.

The present disclosure further provides a network-slice selection method. The network-slice selection method may include steps 1401 and 1402.

Step 1401: transmitting a control instruction by an end-to-end network-slice management and arrangement function entity, wherein the control instruction is any one of an instruction for adding a new network slice, an instruction for removing a network slice, and an instruction for updating a network-slice identifier.

Step 1402: transmitting a message for updating a correspondence relation to the network-slice selection control function entity by the end-to-end network-slice management and arrangement function entity, so that the network-slice selection control function entity updates the correspondence relation between the network-slice identifier and an identifier of a control plane function of a network slice or an identifier of a group of control plane functions of the network slice.

The present disclosure further provides a network-slice selection device. The network-slice selection device includes a third transmission module and a fourth transmission module. The third transmission module is configured to transmit the control instruction, wherein the control instruction is any one of the instruction for adding a new network slice, the instruction for removing a network slice, and the instruction for updating a network-slice identifier. The fourth transmission module is configured to transmit the message for updating the correspondence relation to the network-slice selection control function entity, so that the network-slice selection control function entity updates the correspondence relation between the network-slice identifier and the identifier of the control plane function of the network slice or the identifier of the group of control plane functions of the network slice.

The present disclosure further provides a network architecture which includes the above network-slice selection device.

It should be understood that "an embodiment" or "one embodiment" mentioned throughout the specification of the present disclosure means that specific features, structures or characteristics related to the embodiment are included in at least one embodiment of the present disclosure. Therefore, "in an embodiment" or "in one embodiment" appearing throughout the specification of the present application does not necessarily mean an identical embodiment. Additionally, the specific features, structures or characteristics may be combined in one or more embodiments in any suitable combination.

In the embodiments of the present disclosure, it should be understood that sequential numbers in methods of the present disclosure do not represent a sequential order for performing the methods. An order for performing the methods should be determined according to an inherent functional or logical sequence of the methods, and should not limit ways in which the methods are executed in the embodiments of the present disclosure.

Additionally, terms such as "system" and "network" in the present disclosure may be used interchangeably.

It should be understood that a term "and/or" in the present disclosure only represents an interrelated relation of described objects and may represent three relations of the described objects. For example, 'A and/or B' may represent three cases that only A exists, A and B concurrently exist, or only B exists. Additionally, a symbol "/" in the present disclosure generally represents objects before and after the symbol have a relation "or" between them.

In the embodiments of the present disclosure, it should be understood that "B corresponding to A" represents that B is related to A, and B may be determined according to A. It should be further understood that, "B may be determined according to A" does not mean that the B is determined only according to the A, and the B may also be determined according to the A and/or other factors.

It should be understood that, in the several embodiments provided in the present disclosure, the disclosed device and method can be implemented in other ways. The apparatus embodiments described above are only illustrative. For example, a division of a unit may be only one logically functional division. There may be other divisions in actual implementations, e.g, multiple units and components can be combined or integrated in another system, or some features may be omitted or not executed. Additionally, couplings, or direct couplings, or communication connections between displayed or discussed components may be via some interfaces, and indirect couplings or communication connections between devices or units may be electrical connections, mechanical connections or other forms of connections.

Functional units described in the embodiments of the present disclosure may be integrated in one processing unit or may be separated physically, or two or more of the units may be integrated in one unit. The above integrated units may be implemented by hardware, or may be implemented by a functional unit including hardware and software.

The above integrated units implemented by the functional unit including software may be stored in a computer readable storage medium. The functional unit including software may be stored in the storage medium, the storage medium may include instructions for causing a computing device (which may be a personal computer, a server, a network device or the like) to perform some or parts of the method of the embodiments of the present disclosure. The storage medium may include mediums capable of storing programs and codes, such as a USB disk, a removable disk, a Read Only Memory (ROM), a Random Access Memory (RAM), a Magnetic Disk, a Compact Disk, or the like.

The above described embodiments are optional embodiments of the present disclosure. It should be noted that numerous modifications and embellishments may be made by one of ordinary skills in the art without departing from the principles of the present disclosure, and such modifications and embellishments also fall within the scope of the present disclosure.

## Claims

1. A network-slice selection method, the method comprises:
obtaining (201) one or more of a network-slice selection policy, user subscription information, a network-slice selection assistance parameter, and a user context by a network-slice selection control function entity; and
determining (202) network-slice selection information according to one or more of the network-slice selection policy, the user subscription information, the network-slice selection assistance parameter, and the user context by the network-slice selection control function entity, and transmitting the determined network-slice selection information to a network-slice routing function entity or an access-network side device, so that the network-slice routing function entity or the access-network side device performs routing for signaling or data;
wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

2. The method according to claim 1, wherein, the obtaining one or more of the network-slice selection assistance parameter and the user context by the network-slice selection control function entity, comprises: receiving, by the network-slice selection control function entity, an attach request transmitted by the network-slice routing function entity or the access-network side device, wherein the attach request carries one or more of the network-slice selection assistance parameter and the user context;
the obtaining the network-slice selection policy by the network-slice selection control function entity, comprises: obtaining the network-slice selection policy from a Fifth Generation mobile communication network (5G) policy network function entity by the network-slice selection control function entity;
the obtaining the user subscription information by the network-slice selection control function entity, comprises: obtaining the user subscription information from a subscription database by the network-slice selection control function entity.

3. The method according to claim 1 or claim 2, wherein, the network-slice routing function entity is at a Radio Access Network, or at a Core Network, or between the Radio Access Network and the Core Network, or is combined with the network-slice selection control function entity;
the network-slice selection control function entity is at the Radio Access Network or at the Core Network, or is a network function entity independent from the Radio Access Network and the Core Network.

4. The method according to claim 1, wherein, the network-slice selection assistance parameter comprises one or more of a network-slice identifier, a service type, a network-slice descriptor, a terminal usage type, and a tenant identifier, and the network-slice identifier comprises a network-slice type identifier and/or a network-slice instance identifier.

5. A network-slice selection method, the method comprises:
receiving (301), by a network-slice routing function entity or an access-network side device, network-slice selection information transmitted by a network-slice selection control function entity, wherein the network-slice selection information is determined by the network-slice selection control function entity according to one or more of a network-slice selection policy, user subscription information, a network-slice selection assistance parameter, and a user context; and
performing (302) routing for signaling or data by the network-slice routing function entity or the access-network side device according to the network-slice selection information;
wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

6. The method according to claim 5, further comprising:
transmitting a network-slice identifier to a terminal by the network-slice routing function entity or the access-network side device, so that the terminal updates the network-slice identifier stored in the terminal according to the network-slice identifier received by the terminal.

7. The method according to claim 5, wherein,
the network-slice selection assistance parameter and/or the user context are obtained by the network-slice selection control function entity from an attach request received by the network-slice selection control function entity;
the network-slice selection policy is obtained from a Fifth Generation mobile communication (5G) policy network function entity by the network-slice selection control function entity;
the user subscription information is obtained from a subscription database by the network-slice selection control function entity.

8. The method according to claim 5, wherein, the network-slice routing function entity is at a Radio Access Network or at a Core Network, or between the Radio Access Network and the Core Network, or is combined with the network-slice selection control function entity;
the network-slice selection control function entity is at the Radio Access Network or at the Core Network, or is a network function entity independent from the Radio Access Network and the Core Network.

9. The method according to claim 5, wherein, the network-slice selection assistance parameter comprises one or more of a network-slice identifier, a service type, a network-slice descriptor, a terminal usage type, and a tenant identifier, and the network-slice identifier comprises a network-slice type identifier and/or a network-slice instance identifier.

10. A network-slice selection control function entity, the network-slice selection control function entity comprises:
a first reception module (901), configured to obtain one or more of a network-slice selection policy, user subscription information, a network-slice selection assistance parameter, and a user context; and
a first determination module (902), configured to determine network-slice selection information according to one or more of the network-slice selection policy, the user subscription information, the network-slice selection assistance parameter, and the user context, and transmit the determined network-slice selection information to a network-slice routing function entity, so that the network-slice routing function entity performs routing for signaling or data
wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

11. A network-slice selection device, the network-slice selection device comprises:
a second reception module (1001), configured to receive network-slice selection information transmitted by a network-slice selection control function entity, wherein the network-slice selection information is determined by the network-slice selection control function entity according to one or more of a network-slice selection policy, user subscription information, a network-slice selection assistance parameter, and a user context; and
a first processing module (1002), configured to perform routing for signaling or data according to the network-slice selection information
wherein, the network-slice selection information comprises an identifier of a control plane function or an identifier of a group of control plane functions of a network slice accessed by a user, and the identifier of the control plane function or the identifier of the group of control plane functions of the network slice corresponds to a network-slice identifier of the network slice.

## Patentansprüche

1. Verfahren zum Auswählen von Netzwerkslices, wobei das Verfahren umfasst:
Beziehen (201) von einer Netzwerkslice-Auswahlrichtlinie, Benutzerteilnehmerinformation, einem Netzwerkslice-Auswahlunterstützungsparameter und/oder einem Benutzerkontext durch eine Netzwerkslice-Auswahlsteuerfunktionsinstanz; und
Bestimmen (202) von Netzwerkslice-Auswahlinformation gemäß der Netzwerkslice-Auswahlrichtlinie, der Benutzerteilnehmerinformation, des Netzwerkslice-Auswahlunterstützungsparameters, des Benutzerkontextes oder mehrerer davon durch die Netzwerkslice-Auswahlsteuerfunktionsinstanz, und Übertragen der bestimmten Netzwerkslice-Auswahlinformation an eine Netzwerkslice-Routingfunktionsinstanz oder eine zugangsnetzseitige Vorrichtung, so dass die Netzwerkslice-Routingfunktionsinstanz oder die zugangsnetzseitige Vorrichtung ein Routing für Signalisierung oder Daten durchführt;
wobei die Netzwerkslice-Auswahlinformation einen Identifikator einer Steuerebenenfunktion oder einen Identifikator einer Gruppe von Steuerebenenfunktionen einer Netzwerkslice umfasst, auf die ein Benutzer zugreift, und der Identifikator der Steuerebenenfunktion oder der Identifikator der Gruppe von Steuerebenenfunktionen der Netzwerkslice einem Netzwerkslice-Identifikator der Netzwerkslice entspricht.

2. Verfahren nach Anspruch 1, bei dem das Beziehen des Netzwerkslice-Auswahlunterstützungsparameters und/oder des Benutzerkontextes durch die Netzwerkslice-Auswahlsteuerungsfunktionsinstanz umfasst: Empfangen einer von der Netzwerkslice-Routingfunktionsinstanz oder der zugangsnetzseitigen Vorrichtung übertragenen Attach-Anforderung durch die Netzwerkslice-Auswahlsteuerungsfunktionsinstanz, wobei die Attach-Anforderung den Netzwerkslice-Auswahlunterstützungsparameter und/oder den Benutzerkontext enthält;
das Beziehen der Netzwerkslice-Auswahlrichtlinie durch die Netzwerkslice-Auswahlsteuerungsfunktionsinstanz umfasst: Beziehen der Netzwerkslice-Auswahlrichtlinie von einer Richtliniennetzwerkfunktionsinstanz eines Mobilkommunikationsnetzwerks der fünften Generation (5G) durch die Netzwerkslice-Auswahlsteuerungsfunktionsinstanz;
das Beziehen der Benutzerteilnehmerinformation durch die Netzwerkslice-Auswahlsteuerungsfunktionsinstanz umfasst: Beziehen der Benutzerteilnehmerinformation von einer Teilnehmerdatenbank durch die Netzwerkslice-Auswahlsteuerungsfunktionsinstanz.

3. Verfahren nach Anspruch 1 oder Anspruch 2, bei dem die Netzwerkslice-Routingfunktionsinstanz sich in einem Funkzugangsnetz oder in einem Kernnetz oder zwischen dem Funkzugangsnetz und dem Kernnetz befindet oder mit der Netzwerkslice-Auswahlsteuerungsfunktionsinstanz kombiniert ist;
die Netzwerkslice-Auswahlsteuerungsfunktionsinstanz sich im Funkzugangsnetz oder im Kernnetz befindet oder eine vom Funkzugangsnetz und dem Kernnetz unabhängige Netzwerkfunktionsinstanz ist.

4. Verfahren nach Anspruch 1, bei dem der Netzwerkslice-Auswahlunterstützungsparameter einen Netzwerkslice-Identifikator, einen Diensttyp, einen Netzwerkslice-Deskriptor, einen Endgeräte-Nutzungstyp und einen Teilnehmer-Identifikator oder mehrere davon umfasst, und der Netzwerkslice-Identifikator einen Netzwerkslice-Typ-Identifikator und/oder einen Netzwerkslice-Instanz-Identifikator umfasst.

5. Verfahren zum Auswählen von Netzwerkslices, wobei das Verfahren umfasst:
Empfangen (301) von Netzwerkslice-Auswahlinformation, die von einer Netzwerkslice-Auswahlsteuerungsfunktionsinstanz übertragen wird, durch eine Netzwerkslice-Routingfunktionsinstanz oder ein zugangsnetzseitiges Gerät, wobei die Netzwerkslice-Auswahlinformation von der Netzwerkslice-Auswahlsteuerungsfunktionsinstanz anhand einer Netzwerkslice-Auswahlrichtlinie, Benutzerteilnehmerinformation, einem Netzwerkslice-Auswahlunterstützungsparameter, einem Benutzerkontext oder mehreren davon bestimmt wird; und
Durchführen (302) von Routing für Signalisierung oder Daten durch die Netzwerkslice-Routingfunktionsinstanz oder die zugangsnetzseitige Vorrichtung gemäß der Netzwerkslice-Auswahlinformation;
wobei die Netzwerkslice-Auswahlinformation einen Identifikator einer Steuerebenenfunktion oder einen Identifikator einer Gruppe von Steuerebenenfunktionen einer Netzwerkslice umfasst, auf die ein Benutzer zugreift, und der Identifikator der Steuerebenenfunktion oder der Identifikator der Gruppe von Steuerebenenfunktionen der Netzwerkslice einem Netzwerkslice-Identifikator der Netzwerkslice entspricht.

6. Verfahren nach Anspruch 5, das ferner umfasst:
Übertragen eines Netzwerkslice-Identifikators an ein Endgerät durch die Netzwerkslice-Routingfunktionsinstanz oder die zugangsnetzseitige Vorrichtung, so dass das Endgerät den im Endgerät gespeicherten Netzwerkslice-Identifikator entsprechend dem vom Endgerät empfangenen Netzwerkslice-Identifikator aktualisiert.

7. Verfahren nach Anspruch 5, bei dem
der Netzwerkslice-Auswahlunterstützungsparameter und/oder der Benutzerkontext durch die Netzwerkslice-Auswahlsteuerungsfunktionsinstanz aus einer von der Netzwerkslice-Auswahlsteuerungsfunktionsinstanz empfangenen Attach-Anforderung erhalten werden;
die Netzwerkslice-Auswahlrichtlinie durch die Netzwerkslice-Auswahlsteuerungsfunktionsinstanz von einer Richtliniennetzwerkfunktionsinstanz eines Mobilkommunikationsnetzwerks der fünften Generation (5G) bezogen wird;
die Benutzerteilnehmerinformation durch die Netzwerkslice-Auswahlsteuerungsfunktionsinstanz aus einer Teilnehmerdatenbank bezogen wird.

8. Verfahren nach Anspruch 5, bei dem sich die Netzwerkslice-Routingfunktionsinstanz in einem Funkzugangsnetz oder in einem Kernnetz oder zwischen dem Funkzugangsnetz und dem Kernnetz befindet oder mit der Netzwerkslice-Auswahlsteuerungsfunktionsinstanz kombiniert ist;
die Netzwerkslice-Auswahlsteuerungsfunktionsinstanz sich im Funkzugangsnetz oder im Kernnetz befindet oder eine vom Funkzugangsnetz und dem Kernnetz unabhängige Netzwerkfunktionsinstanz ist.

9. Verfahren nach Anspruch 5, bei dem der Netzwerkslice-Auswahlunterstützungsparameter einen Netzwerkslice-Identifikator, einen Diensttyp, einen Netzwerkslice-Deskriptor, einen Endgeräte-Nutzungstyp, einen Teilnehmer-Identifikator oder mehrere davon umfasst, und der Netzwerkslice-Identifikator einen Netzwerkslice-Typ-Identifikator und/oder einen Netzwerkslice-Instanz-Identifikator umfasst.

10. Netzwerkslice-Auswahlsteuerungsfunktionsinstanz, wobei die Netzwerkslice-Auswahlsteuerungsfunktionsinstanz umfasst:
ein erstes Empfangsmodul (901), das konfiguriert ist, um eine Netzwerkslice-Auswahlrichtlinie, Benutzerteilnehmerinformation, einen Netzwerkslice-Auswahlunterstützungsparameter und/oder einen Benutzerkontext zu erhalten; und
ein erstes Bestimmungsmodul (902), konfiguriert zum Bestimmen von Netzwerkslice-Auswahlinformation gemäß der Netzwerkslice-Auswahlrichtlinie, der Benutzerteilnehmerinformation, dem Netzwerkslice-Auswahlunterstützungsparameter und/oder dem Benutzerkontext, und zum Übertragen der bestimmten Netzwerkslice-Auswahlinformation an eine Netzwerkslice-Routingfunktionsinstanz, so dass die Netzwerkslice-Routingfunktionsinstanz ein Routing für Signalisierung oder Daten durchführt;
wobei die Netzwerkslice-Auswahlinformation einen Identifikator einer Steuerebenenfunktion oder einen Identifikator einer Gruppe von Steuerebenenfunktionen einer Netzwerkslice umfasst, auf die ein Benutzer zugreift, und der Identifikator der Steuerebenenfunktion oder der Identifikator der Gruppe von Steuerebenenfunktionen der Netzwerkslice einem Netzwerkslice-Identifikator der Netzwerkslice entspricht.

11. Netzwerkslice-Auswahlvorrichtung, wobei die Netzwerkslice-Auswahlvorrichtung umfasst:
ein zweites Empfangsmodul (1001), das konfiguriert ist, um Netzwerkslice-Auswahlinformationen zu empfangen, die von einer Netzwerkslice-Auswahlsteuerungsfunktionsinstanz übertragen werden, wobei die Netzwerkslice-Auswahlinformation von der Netzwerkslice-Auswahlsteuerungsfunktionsinstanz gemäß einer Netzwerkslice-Auswahlrichtlinie, Benutzerteilnehmerinformation, einem Netzwerkslice-Auswahlunterstützungsparameter, einem Benutzerkontext oder mehreren davon bestimmt werden; und
ein erstes Verarbeitungsmodul (1002), das konfiguriert ist, um ein Routing für Signalisierung oder Daten gemäß der Netzwerkslice-Auswahlinformation durchzuführen,
wobei die Netzwerkslice-Auswahlinformation einen Identifikator einer Steuerebenenfunktion oder einen Identifikator einer Gruppe von Steuerebenenfunktionen einer Netzwerkslice umfasst, auf die ein Benutzer zugreift, und der Identifikator der Steuerebenenfunktion oder der Identifikator der Gruppe von Steuerebenenfunktionen des Netzwerkslice einem Netzwerkslice-Identifikator des Netzwerkslice entspricht.

## Revendications

1. Procédé de sélection de tranche de réseau, le procédé prévoyant :
d'obtenir (201) une ou plusieurs politiques de sélection de tranche de réseau, informations d'abonnement de l'utilisateur, paramètre d'assistance à la sélection de tranche de réseau, et un contexte d'utilisation par une entité fonctionnelle de sélection de tranche de réseau ; et
de déterminer (202) des informations de sélection de tranche de réseau selon une ou plusieurs politiques de sélection de tranche de réseau, les informations sur l'abonnement de l'utilisateur, le paramètre d'assistance à la sélection de tranche de réseau, et le contexte d'utilisation par l'entité fonctionnelle de sélection de tranche de réseau, et transmettre les informations de sélection de tranche de réseau déterminées à une entité fonctionnelle de routage de tranche de réseau ou à un dispositif côté réseau d'accès, de sorte que l'entité fonctionnelle de routage de tranche de réseau ou le dispositif côté réseau d'accès effectue le routage pour la signalisation ou les données ;
procédé dans lequel les informations de sélection de tranche de réseau comprennent un identifiant d'une fonction de planification de contrôle ou un identifiant d'un groupe de fonctions de planification de contrôle d'une tranche de réseau à laquelle un utilisateur a accès, et l'identifiant de la fonction de planification de contrôle ou l'identifiant du groupe de fonctions de planification de contrôle de la tranche de réseau correspond à un identifiant de tranche de réseau de la tranche de réseau.

2. Procédé selon la revendication 1, selon lequel l'obtention d'un ou plusieurs paramètres d'assistance à la sélection de tranche de réseau et du contexte d'utilisation par l'entité fonctionnelle de contrôle de sélection de tranche de réseau comprend : la réception, par l'entité fonctionnelle de contrôle de sélection de tranche de réseau, une demande d'attachement transmise par l'entité fonctionnelle de routage de tranche de réseau ou par le dispositif côté réseau d'accès, où la demande d'attachement achemine un ou plusieurs paramètres d'assistance à la sélection de tranche de réseau et le contexte d'utilisation ;
l'obtention de la politique de sélection de tranche de réseau par l'entité fonctionnelle de contrôle de sélection de tranche de réseau comprend : l'obtention de la politique de sélection de tranche de réseau d'une entité fonctionnelle de réseau de politique de réseau de communication mobile de cinquième génération (5G) par l'entité fonctionnelle de contrôle de sélection de tranche de réseau ;
l'obtention des informations sur l'abonnement de l'utilisateur par l'entité fonctionnelle de contrôle de sélection de tranche de réseau, comprend : l'obtention des informations sur l'abonnement de l'utilisateur d'une base de données d'abonnement par l'entité fonctionnelle de contrôle de sélection de tranche de réseau.

3. Procédé selon la revendication 1 ou la revendication 2, selon lequel l'entité fonctionnelle de routage de tranche de réseau est sur un réseau d'accès radio (RAN) ou sur un réseau cœur (CN), ou entre le réseau RAN et le réseau cœur (CN), ou est combinée avec l'entité fonctionnelle de contrôle de sélection de tranche de réseau ;
l'entité fonctionnelle de contrôle de sélection de tranche de réseau est sur le réseau d'accès radio (RAN) ou sur le réseau cœur (CN), ou est une entité fonctionnelle de réseau indépendante du réseau d'accès radio ou du réseau cœur.

4. Procédé selon la revendication 1, selon lequel le paramètre d'assistance à la sélection de tranche de réseau comprend un ou plusieurs identifiants de tranche de réseau, un type de service, un descripteur de tranche de réseau, un type d'utilisation de terminal, et un identifiant de locataire, et l'identifiant de tranche de réseau comprend un identifiant de type de tranche de réseau et/ou un identifiant d'instance de tranche de réseau.

5. Procédé de sélection de tranche de réseau, le procédé comprenant :
de recevoir (301), par une entité fonctionnelle de routage de tranche de réseau ou un dispositif côté réseau d'accès, des informations de sélection de tranche de réseau transmises par une entité fonctionnelle de contrôle de sélection de tranche de réseau, où les informations de sélection de tranche de réseau sont déterminées par l'entité fonctionnelle de sélection de tranche de réseau selon une ou plusieurs politiques de sélection de tranche de réseau, des informations d'abonnement de l'utilisateur, un paramètre d'assistance à la sélection de tranche de réseau, et un contexte d'utilisation ; et
d'effectuer (302) un routage pour la signalisation ou les données par l'entité fonctionnelle de routage de tranche de réseau ou le dispositif côté réseau d'accès selon les informations de sélection de tranche de réseau ;
où les informations de sélection de tranche de réseau comprennent un identifiant d'une fonction de planification de contrôle ou un identifiant d'un groupe de fonctions de planification de contrôle d'une tranche de réseau à laquelle un utilisateur a accès, et l'identifiant de la fonction de planification de contrôle ou l'identifiant du groupe de fonctions de planification de contrôle de la tranche de réseau correspond à un identifiant de tranche de réseau de la tranche de réseau.

6. Procédé selon la revendication 5, comprenant de plus :
la transmission d'un identifiant de tranche de réseau à un terminal par l'entité fonctionnelle de routage de tranche de réseau ou le dispositif côté réseau d'accès, de sorte que le terminal mette à jour l'identifiant de tranche de réseau stocké dans le terminal selon l'identifiant de tranche de réseau reçu par le terminal.

7. Procédé selon la revendication 5, selon lequel :
le paramètre d'assistance à la sélection de tranche de réseau et/ou le contexte d'utilisation sont obtenus par l'entité fonctionnelle de contrôle de sélection de tranche de réseau à partir d'une demande d'attachement reçue par l'entité fonctionnelle de contrôle de sélection de tranche de réseau ;
la politique de sélection de tranche de réseau est obtenue à partir d'une entité fonctionnelle de réseau de politique de communication mobile de cinquième génération (5G) par l'entité fonctionnelle de contrôle de sélection de tranche de réseau ;
les informations d'abonnement de l'utilisateur sont obtenues à partir d'une base de données d'abonnement par l'entité fonctionnelle de contrôle de sélection de tranche de réseau.

8. Procédé selon la revendication 5, selon lequel l'entité fonctionnelle de routage de tranche de réseau est sur un réseau d'accès radio (RAN) ou un réseau cœur (CN), ou entre le réseau RAN et le réseau CN, ou est combinée avec l'entité fonctionnelle de contrôle de sélection de tranche de réseau ;
l'entité fonctionnelle de contrôle de sélection de tranche de réseau est sur le réseau d'accès radio (RAN) ou le réseau cœur (CN), ou est une entité fonctionnelle de réseau indépendante du réseau d'accès radio ou du réseau cœur.

9. Procédé selon la revendication 5, selon lequel le paramètre d'assistance à la sélection de tranche de réseau comprend un ou plusieurs identifiants de tranche de réseau, un type de service, un descripteur de tranche de réseau, un type d'utilisation de terminal, et un identifiant de locataire, et l'identifiant de tranche de réseau comprend un identifiant de type de tranche de réseau et/ou un identifiant d'instance de tranche de réseau.

10. Entité fonctionnelle de contrôle de sélection de tranche de réseau, l'entité fonctionnelle de contrôle de sélection de tranche de réseau comprenant :
un premier module de réception (901), configuré pour obtenir une ou plusieurs politiques de sélection de tranche de réseau, des informations d'abonnement de l'utilisateur, un paramètre d'assistance à la sélection de tranche de réseau, et un contexte d'utilisation ; et
un premier module de détermination (902), configuré pour déterminer des informations de sélection de tranche de réseau selon une ou plusieurs politiques de sélection de tranche de réseau, les informations d'abonnement de l'utilisateur, le paramètre d'assistance à la sélection de tranche de réseau, et le contexte d'utilisation, et transmettre les informations de sélection de tranche de réseau déterminées à une entité fonctionnelle de routage de tranche de réseau, de sorte que l'entité fonctionnelle de routage de tranche de réseau effectue le routage pour la signalisation ou les données,
où les informations de sélection de tranche de réseau comprennent un identifiant d'une fonction de planification de contrôle ou un identifiant d'un groupe de fonctions de planification de contrôle d'une tranche de réseau à laquelle un utilisateur a accès, et l'identifiant de la fonction de planification de contrôle ou l'identifiant du groupe de fonctions de planification de contrôle de la tranche de réseau correspond à un identifiant de tranche de réseau de la tranche de réseau.

11. Dispositif de sélection de tranche de réseau, le dispositif de sélection de tranche de réseau comprenant :
un second module de réception (1001), configuré pour recevoir des informations de sélection de tranche de réseau transmises par une entité fonctionnelle de contrôle de sélection de tranche de réseau, où les informations de sélection de tranche de réseau sont déterminées par l'entité fonctionnelle de contrôle de sélection de tranche de réseau selon une ou plusieurs politiques de sélection de tranche de réseau, les informations d'abonnement de l'utilisateur, un paramètre d'assistance à la sélection de tranche de réseau et un contexte d'utilisation ; et
un premier module de traitement (1002), configuré pour effectuer le routage pour la signalisation ou les données selon les informations de sélection de tranche de réseau,
où les informations de sélection de tranche de réseau comprennent un identifiant d'une fonction de planification de contrôle ou un identifiant d'un groupe de fonctions de planification de contrôle d'une tranche de réseau à laquelle un utilisateur a accès, et l'identifiant de la fonction de planification de contrôle ou l'identifiant du groupe de fonctions de planification de contrôle de la tranche de réseau correspond à un identifiant de tranche de réseau de la tranche de réseau.
